# EUROPEAN PATENT APPLICATION

(11) **EP 4 604 083 A1**
(43) Date of publication of application: **20.08.2025**
(21) Application number: 23884694.3
(22) Date of filing: 25.10.2023
(51) Int. Cl.: G06V 40/60

(54) **GUIDE FRAME DISPLAY METHOD AND ELECTRONIC DEVICE**

(30) Priority: 04.11.2022 CN 202211376880
(71) Applicant: Huawei Technologies Co., Ltd., Shenzhen, Guangdong 518129 (CN)
(72) Inventor: ZHAO, Jie, Shenzhen, Guangdong 518129 (CN); LIU, Dengkuan, Shenzhen, Guangdong 518129 (CN); CHEN, Xiaohan, Shenzhen, Guangdong 518129 (CN); MA, Chunhui, Shenzhen, Guangdong 518129 (CN); HUANG, Lei, Shenzhen, Guangdong 518129 (CN)
(74) Representative: Grünecker Patent- und Rechtsanwälte PartG mbB
(86) International application number: PCT/CN2023/126569
(87) International publication number: WO 2024/093762

(57) **Abstract**

This application provides a guide box display method and an electronic device, and is applied to the field of terminal technologies, to resolve a problem that in a data collection process, the electronic device cannot well guide a user to complete a specific condition for data collection, and user experience is affected. The method includes: displaying a first interface, where the first interface includes a first guide box and a first portrait in a captured first image, the first guide box is used to guide a user to strike a first pose, and the first guide box is determined based on a user body parameter corresponding to the first portrait; capturing a second image of the user, where the second image includes a second portrait of the user; and displaying the second portrait and a second guide box on the first interface, where the second guide box is a guide box obtained by adjusting the first guide box, and the second guide box is determined based on a user body parameter corresponding to the second portrait.

## Description

This application claims priority to Chinese Patent Application No. 202211376880.3, filed with the China National Intellectual Property Administration on November 4, 2022 and entitled "GUIDE BOX DISPLAY METHOD AND ELECTRONIC DEVICE", which is incorporated herein by reference in its entirety.

### TECHNICAL FIELD

This application relates to the field of terminal technologies, and in particular, to a guide box display method and an electronic device.

### BACKGROUND

With rapid development of the fields such as multimedia and extended reality (extended reality, XR), there are more interactions between electronic devices and people. In some cases, an electronic device needs to complete recording or collection of user portrait information under a specific condition, to implement a specific function.

However, in a data collection process, the electronic device cannot well guide a user to complete the specific condition, which affects user experience.

### SUMMARY

This application provides a guide box display method and an electronic device. A guide box in the electronic device may highly fit with a user portrait, to help a user quickly and accurately strike a specific pose indicated by the guide box. This improves user experience and efficiency.

To achieve the foregoing objective, the following technical solutions are used in this application.

According to a first aspect, this application provides a guide box display method. The method is applied to a first electronic device, and the method includes: displaying a first interface, where the first interface includes a first guide box and a first portrait in a captured first image, the first guide box is used to guide a user to strike a first pose, and the first guide box is determined based on a user body parameter corresponding to the first portrait; capturing a second image of the user, where the second image includes a second portrait of the user; and displaying the second portrait and a second guide box on the first interface, where the second guide box is a guide box obtained by adjusting the first guide box, and the second guide box is determined based on a user body parameter corresponding to the second portrait.

In other words, the first electronic device displays the first guide box and the first portrait of the user on the first interface, and the first guide box is determined based on the user body parameter that is collected by the first electronic device and corresponds to the first portrait of the user in the first image. After the user adjusts the pose, the first electronic device captures the second portrait of the user in the second image, and the first electronic device adjusts the first guide box based on the user body parameter corresponding to the second portrait, and determines and displays the second guide box. A size of the first guide box dynamically changes with the first portrait of the user. When the user moves forward and backward, the size of the first guide box also dynamically changes with a user portrait. In this way, the first guide box may highly fit with the user portrait, to help the user quickly and accurately strike a specific pose indicated by the guide box. This improves user experience and efficiency.

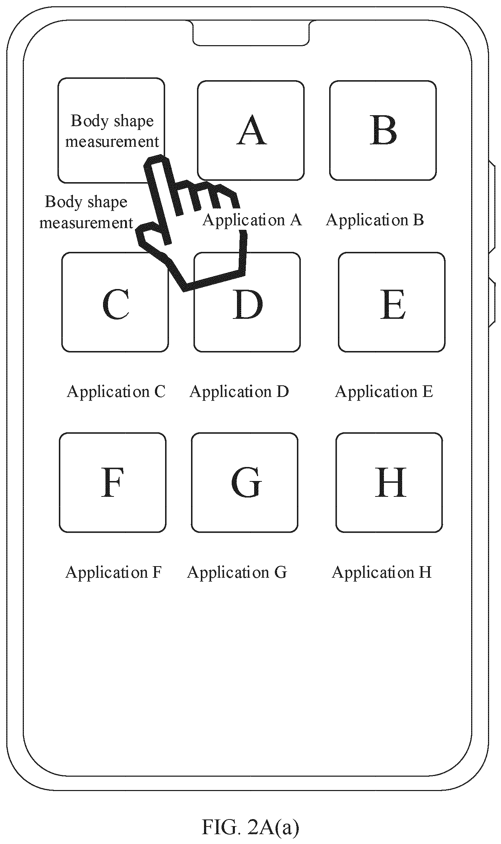

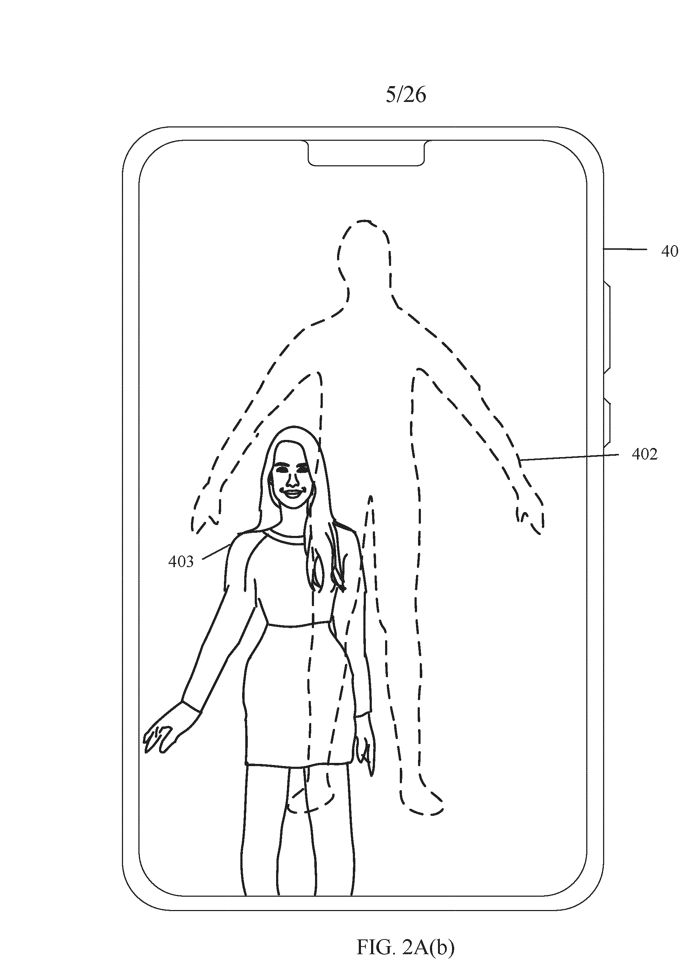

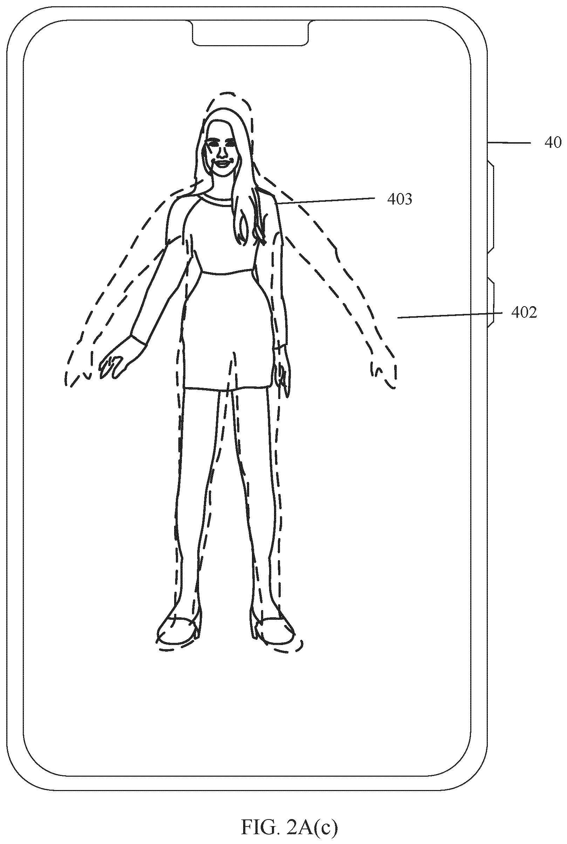

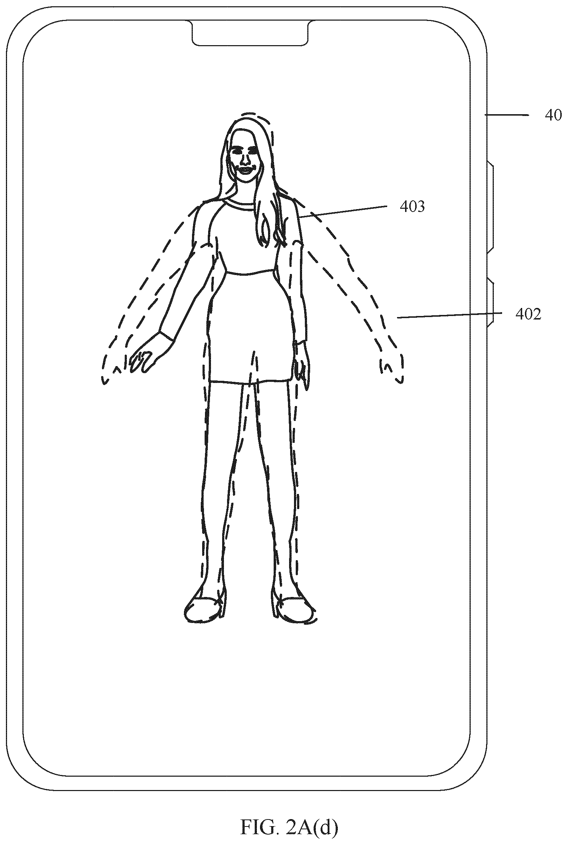

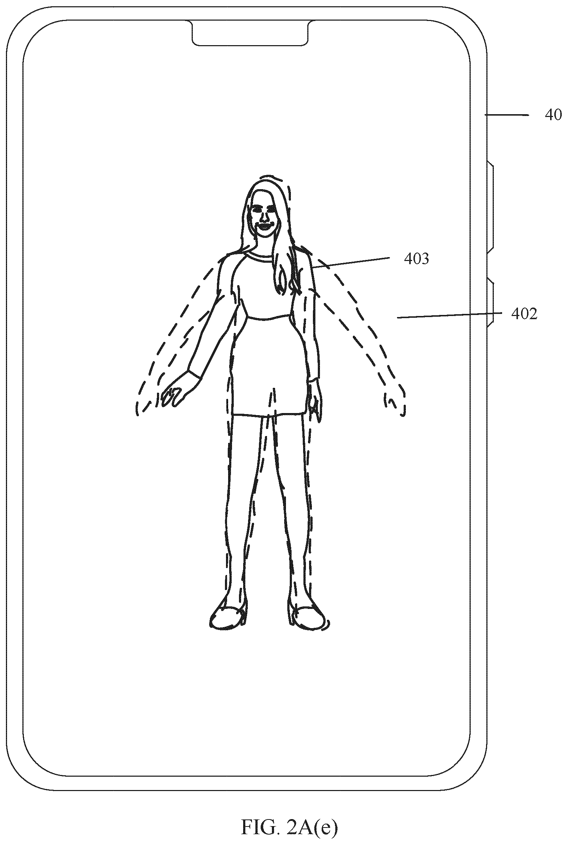

For example, as shown in FIG. 2A(d), a mobile phone may determine a guide box 402 (the first guide box) based on a height and fatness or thinness of a portrait 403 (the first portrait). A size of the guide box 402 in FIG. 2A(d) adapts to a real body shape of the user. Then, if the mobile phone detects a change of the portrait 403, the mobile phone may control the guide box 402 to change with the portrait 403. For example, after the user adjusts a relative distance between the user and the mobile phone (for example, moves in a direction away from the mobile phone), as shown in FIG. 2A(d), a portrait 403 (the second portrait) captured by the mobile phone becomes smaller, as shown in FIG. 2A(e). Correspondingly, a guide box 402 (the second guide box) becomes smaller as the portrait 403 becomes smaller.

In a possible implementation, the body parameter includes any one or more of the following parameters: a height, a weight, a gender, an age, a circumference of each part of the user and a length of a limb, skeleton key points, and a hairstyle.

Optionally, the guide box may be determined based on skeleton key points of the user portrait.

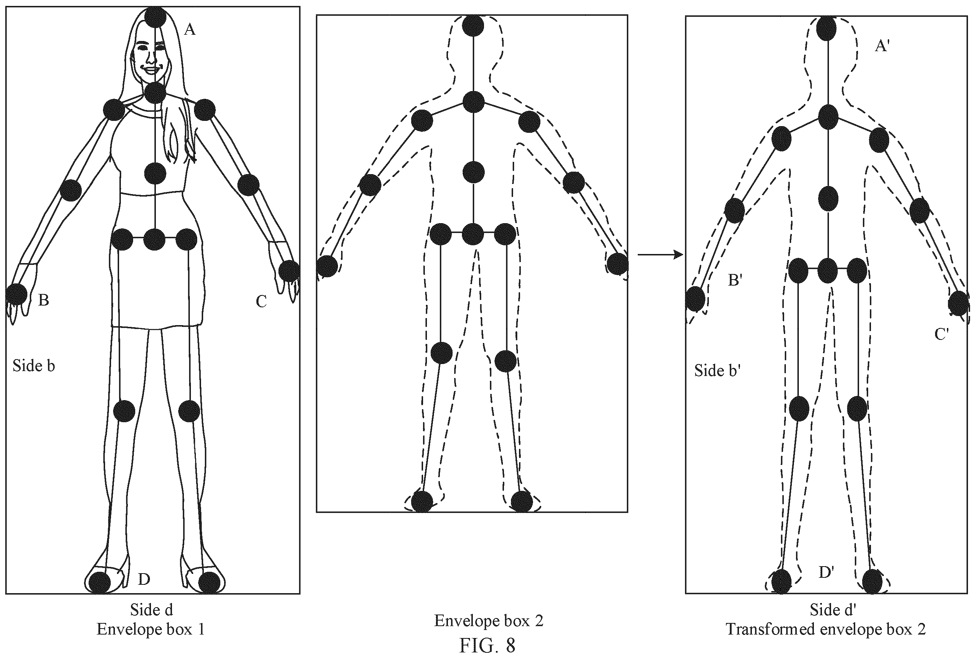

For example, as shown in FIG. 8, the mobile phone may obtain the skeleton key points of the portrait, and calculate an envelope box 1 of the portrait by using a plurality of skeleton key points in the portrait as portrait boundaries. Similarly, the mobile phone may obtain skeleton key points of the guide box, and calculate an envelope box 2 of the guide box by using a plurality of skeleton key points in the guide box as portrait boundaries. The mobile phone performs stretching transformation and/or scaling transformation on the envelope box 2 based on a length and a width of the envelope box 1, to obtain the transformed envelope box 2. A size of a guide box in the transformed envelope box 2 matches a size of the real body shape of the user.

Optionally, that the size of the guide box matches the size of the real body shape of the user means a height of the guide box is the same as a height of the user portrait, and a width of the guide box is the same as a width of a widest part of the user portrait.

Optionally, a guide box corresponding to the user portrait may alternatively be determined based on another body parameter. For details, refer to embodiment parts.

In a possible implementation, the second guide box is obtained by performing perspective transformation, stretching transformation, or scaling transformation on the first guide box based on the second portrait and the first guide box.

Optionally, perspective transformation, stretching transformation, or scaling transformation is performed on the first guide box based on the second portrait to obtain the second guide box. Because the first guide box already fits with the first portrait to a high degree, and the second portrait and the first portrait are portraits of the same user, the first guide box fits with the second portrait to a high degree. Transformation is performed based on the first guide box, so that calculation complexity of the first electronic device can be reduced, and efficiency can be improved.

For example, as shown in the figure, after the user adjusts the relative distance between the user and the mobile phone (for example, moves in the direction away from the mobile phone), the portrait 403 captured by the mobile phone becomes smaller, as shown in FIG. 2A(e). In this case, perspective transformation, stretching transformation, or scaling transformation is performed on the guide box 403 (the first guide box) in FIG. 2A(d) based on the smaller portrait, to obtain the smaller guide box 403 (the second guide box) in FIG. 2A(e).

In a possible implementation, after the displaying a first interface including a first portrait, the method further includes:
capturing a third image of the user, where the third image includes a third portrait of the user, the third image is an image captured after the first image is captured, and a user pose corresponding to the third portrait is different from a user pose corresponding to the first portrait; displaying the third portrait on the first interface; and if the user pose corresponding to the third portrait is consistent with a user pose corresponding to the first guide box, collecting a body parameter of the user in the pose corresponding to the first guide box.

Optionally, if the user pose corresponding to the third portrait is inconsistent with a user pose corresponding to the first guide box, prompt information is presented to prompt for parts that are not aligned between the third portrait and the first guide box.

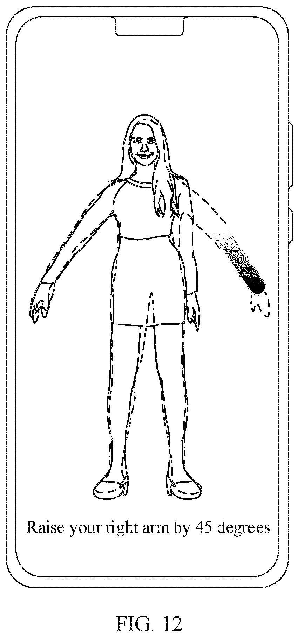

Optionally, that prompt information is presented includes that a UI effect of the unaligned parts is different from a UI effect of aligned parts. For example, as shown in FIG. 12, a current pose of the user is that the left arm is raised by 45 degrees, and the right arm is not raised. In this case, the mobile phone may give the user a prompt "Raise your right arm by 45 degrees." The mobile phone may further superimpose another color on a right arm part in the guide box on the interface, to inform the user that a pose of the right arm is inconsistent.

Optionally, if the user pose corresponding to the third portrait is consistent with the user pose corresponding to the first guide box, photographing is performed.

In a possible implementation, before the first image of the user is captured, the method further includes: displaying a third guide box on the first interface. After the first image of the user is captured, that the first interface includes the first guide box and the first portrait includes: displaying the first portrait on the first interface; and if the first portrait meets a first condition, adjusting the third guide box on the first interface to the first guide box. The first condition includes that the first portrait is a full-body portrait, and a size of the first portrait is within a preset size range.

Optionally, the third guide box may be a guide box in a model library of the first electronic device, or may be a historical guide box for the user.

For example, as shown in FIG. 2A(b), a guide box 402 (the third guide box) and a user portrait 403 (the third portrait) are displayed on an interface 40 of a mobile phone. A contour and a size of the guide box 402 may be preset, or may be determined based on a historical body parameter of the user.

In a possible implementation, after the displaying a first interface including a first portrait, the method further includes: sending information about the first guide box and information about the first portrait to a second electronic device, so that the second electronic device displays the first guide box and the first portrait.

Optionally, the user may strike a specific pose based on a picture prompt in the second electronic device, so that visual experience of the user is improved.

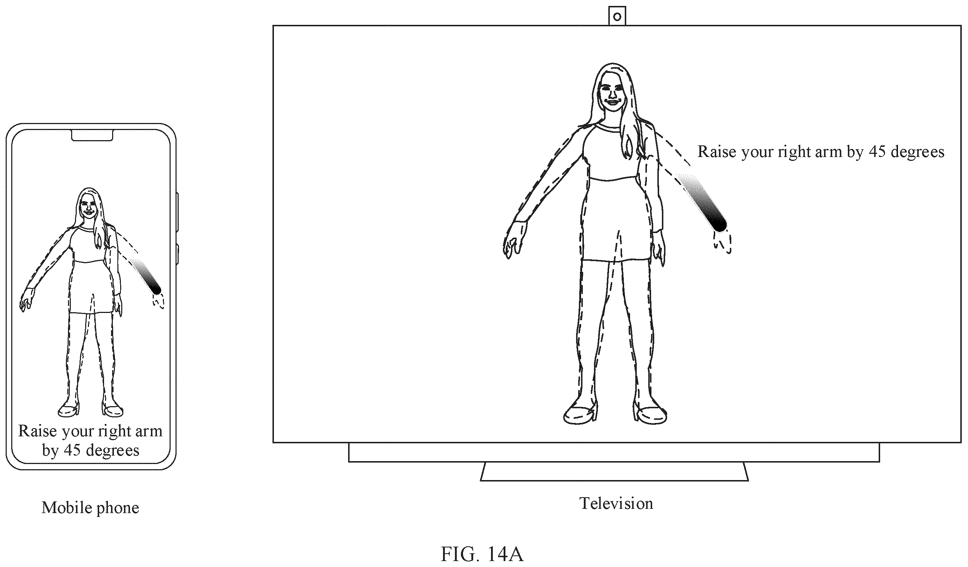

For example, as shown in FIG. 14A, the mobile phone may send a portrait and a corresponding guide box to a television, and the mobile phone and the television synchronously display the portrait and the corresponding guide box. After the user strikes a specific pose in the guide box based on a picture prompt in the television, the mobile phone performs photographing, and performs body shape analysis on the user based on a photo.

In a possible implementation, the method further includes: capturing a fourth image of the user, where the fourth image includes a fourth portrait of the user; and if the fourth portrait does not meet a second condition, presenting first prompt information, to prompt the user to perform adjustment so that the portrait meets the second condition; or if the fourth portrait meets a second condition, displaying a fourth guide box on the first interface based on the fourth portrait, where the fourth guide box is determined based on a user body parameter corresponding to the fourth portrait. The second condition includes any one or more of the following conditions: a size of the portrait is within the preset size range, the portrait is a full-body portrait, the portrait is at a middle position of the first interface, the portrait is a portrait of one user, and imaging quality of the portrait meets preset imaging quality.

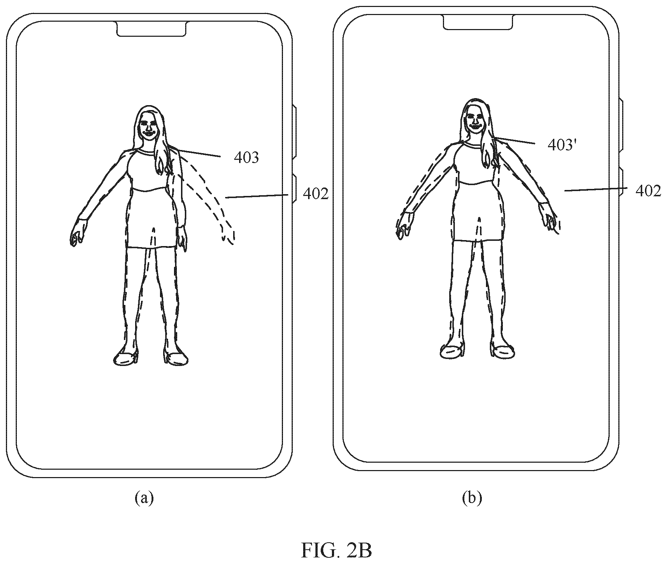

Optionally, if the fourth portrait does not meet the second condition, first prompt information is presented, to prompt the user to perform adjustment so that the portrait meets the second condition. For example, as shown in (a) in FIG. 2B, a guide box 402 (the fourth guide box) and a portrait 403 (the fourth portrait) are displayed on the interface 40. Initially, an arm of the user is not raised. The user may raise the arm based on a pose corresponding to the guide box 402.

Optionally, if the fourth portrait meets the second condition, the fourth guide box is displayed on the first interface based on the fourth portrait. For example, as shown in (b) in FIG. 2B, a pose corresponding to a portrait 403' (the fourth portrait) is consistent with the pose (a frontal standing pose) corresponding to the guide box 402 (the fourth guide box). After detecting that the pose corresponding to the portrait is consistent with the pose corresponding to the guide box 402, the mobile phone may automatically perform photographing, or the user may tap a photographing button to control the mobile phone to perform photographing.

Optionally, the first electronic device detects the second condition that the size of the portrait is within the preset size range, the portrait is a full-body portrait, the portrait is at the middle position of the first interface, the portrait is a portrait of one user, and the imaging quality of the portrait meets the preset imaging quality, and the like, and may prompt the user step by step to meet these conditions. For example, steps S101 to S107 in embodiments are performed.

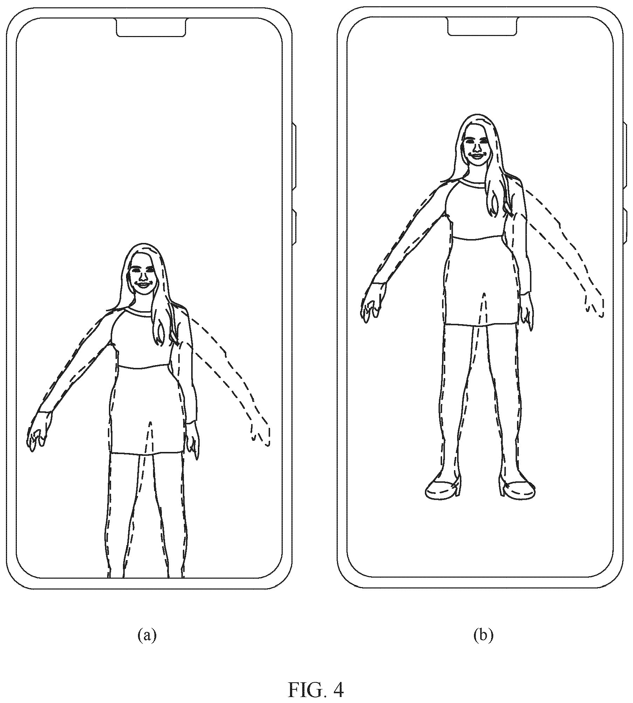

For example, the mobile phone may detect completeness of the user portrait in a display picture. As shown in (a) in FIG. 4, if the user is excessively close to the mobile phone or at a position excessively deviated from the mobile phone, a part of the user portrait may be displayed on a display interface of the mobile phone. In this case, the mobile phone may prompt the user to adjust a relative position relationship between the user and the mobile phone, to ensure that a full body of the user is on the display interface of the mobile phone. For example, a voice prompt 3 may be "Move your position to ensure that the full-body portrait is on the display interface of the mobile phone."

Optionally, the mobile phone sequentially performs cyclic detection on the user according to steps S101 to S107. When detecting that image quality or the portrait does not meet a requirement, the mobile phone prompts, in a voice manner or another manner, the user to adjust the position or a pose, or adjust a position of the mobile phone. Alternatively, when detecting that steps S101 to S103 meet requirements, the mobile phone does not perform subsequent detection according to steps S101 to S103, but performs cyclic detection according to steps S104 to S107. When detecting that the portrait does not meet the requirement, the mobile phone prompts the user by using a voice to adjust the position or the pose, or adjust the position of the mobile phone.

In a possible implementation, before the displaying a third guide box on the first interface, the method further includes: obtaining a historical body parameter of the user; capturing a fifth image of the user, where the fifth image includes a fifth portrait of the user; and determining the third guide box based on the historical body parameter and the fifth portrait of the user.

Optionally, a size and a position of the third guide box on the first interface may be determined based on the historical body parameter of the user and a position of the fifth portrait. A difference between the historical body parameter and a current body parameter of the user is small. In this way, the third guide box obtained based on the historical body parameter fits with the user portrait to a high degree. When the first guide box is subsequently obtained by adjusting the third guide box, a calculation amount of the first electronic device is small, and efficiency is high.

For example, the first electronic device may determine the third guide box based on the historical body parameter of the user and a portrait 403 (the fifth portrait) in FIG. 2A(c).

In a possible implementation, before the displaying the second portrait and a second guide box on the first interface, the method further includes: obtaining information about a target part in the second portrait, where the target part in the second portrait is not aligned with a corresponding part in the first guide box, and the target part includes a plurality of limb parts obtained by performing portrait segmentation on the second portrait; and adjusting the first guide box based on the information about the target part in the second portrait, to obtain the second guide box.

Optionally, when the first guide box fits with the first portrait to a high degree, the user moves the position. In this case, the user is displayed as the second portrait on the first interface. After the plurality of limb parts are obtained by performing portrait segmentation on the second portrait, length and width information of the plurality of limb parts are obtained. Transformation of each part of in the first guide box is performed based on the length and width information of the plurality of limb parts, to obtain the second guide box corresponding to the second portrait. In this way, the second guide box fits with the second portrait to a high degree, so that visual experience of the user is improved.

In a possible implementation, the first guide box includes a three-dimensional guide box or a planar guide box, and the three-dimensional guide box is determined by projecting three-dimensional reconstruction information of the first portrait, depth information, and parameter information of a camera device onto a two-dimensional screen.

Optionally, the three-dimensional guide box is more delicate and realistic, and fits with the user portrait to a higher degree, so that the user can be guided to strike a more accurate pose.

In a possible implementation, a user interface UI effect of the first guide box is different from a UI effect of the first portrait.

Optionally, a color of the first portrait may be different from a color of the first guide box, and the first guide box may further blink, so that the user can distinguish between the portrait and the guide box.

For example, the guide box may be displayed in different colors. For example, the guide box may automatically generate a color with a large contrast based on a color of user clothes. For example, when the user wears red clothes, the color of the guide box may be green, and the color of the user clothes is in a large contrast to the color of the guide box, so that the user determines whether a current pose of the user is consistent with a pose in the guide box.

Optionally, when the first portrait is inconsistent with the pose corresponding to the first guide box, another color may be superimposed on an inconsistent part in the first guide box, to inform the user that the pose is inconsistent.

For example, as shown in FIG. 12, a specific pose in the guide box is that two arms are raised by 45 degrees, and the current pose of the user is that the left arm is raised by 45 degrees, and the right arm is not raised. In this case, the mobile phone may further superimpose the another color on the right arm part in the guide box on the interface, to inform the user that the pose of the right arm is inconsistent.

According to a second aspect, this application provides an electronic device, including a display, one or more cameras, one or more processors, and one or more memories. The memory stores one or more computer programs. The one or more computer programs include instructions. When the instructions are executed by the electronic device, the electronic device is enabled to perform the method according to any implementation of the first aspect.

According to a third aspect, this application provides a computer storage medium, including computer instructions. When the computer instructions are run on a computer, the computer is enabled to perform the method according to any implementation of the first aspect.

According to a fourth aspect, this application provides a chip system, including at least one processor and at least one interface circuit. The at least one interface circuit is configured to: perform a transceiver function, and send instructions to the at least one processor. When the at least one processor executes the instructions, the at least one processor performs the method according to any implementation of the first aspect.

According to a fifth aspect, this application further provides a computer program product, including instructions. When the instructions are run on a computer, the computer is enabled to perform the method according to any implementation of the first aspect.

For technical effects corresponding to the second aspect to the fifth aspect and any implementation of the second aspect to the fifth aspect, refer to the technical effects corresponding to the first aspect and any implementation of the first aspect. Details are not described herein again.

### BRIEF DESCRIPTION OF DRAWINGS

FIG. 1A is an interface display diagram according to an embodiment of this application;
FIG. 1B is a diagram of a system according to an embodiment of this application;
FIG. 1C is a diagram of a structure of an electronic device according to an embodiment of this application;
FIG. 1D is a diagram of a structure of another electronic device according to an embodiment of this application;
FIG. 2A(a) to FIG. 2A(e) are a diagram of interfaces according to an embodiment of this application;
FIG. 2B is another diagram of interfaces according to an embodiment of this application;
FIG. 3 is a diagram of distribution of skeleton key points according to an embodiment of this application;
FIG. 4 is another diagram of interfaces according to an embodiment of this application;
FIG. 5 is another diagram of interfaces according to an embodiment of this application;
FIG. 6 is another diagram of interfaces according to an embodiment of this application;
FIG. 7A is a diagram of a position of a mobile phone according to an embodiment of this application;
FIG. 7B is another diagram of interfaces according to an embodiment of this application;
FIG. 7C is another diagram of an interface according to an embodiment of this application;
FIG. 8 is another diagram of interfaces according to an embodiment of this application;
FIG. 9A is another diagram of interfaces according to an embodiment of this application;
FIG. 9B is another diagram of interfaces according to an embodiment of this application;
FIG. 10 is another diagram of interfaces according to an embodiment of this application;
FIG. 11 is another diagram of an interface according to an embodiment of this application;
FIG. 12 is another diagram of an interface according to an embodiment of this application;
FIG. 13 is a flowchart of a guide box display method according to an embodiment of this application;
FIG. 14A is another diagram of interfaces according to an embodiment of this application;
FIG. 14B is another diagram of an interface according to an embodiment of this application;
FIG. 15 is a diagram of a structure of an electronic device apparatus according to an embodiment of this application; and
FIG. 16 is a diagram of a structure of a chip system according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended for a purpose of describing specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that in the following embodiments of this application, "at least one" and "one or more" mean one or at least two (including two).

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application shall not be explained as being more preferred or having more advantages than another embodiment or design scheme. Exactly, use of the term "example", "for example", or the like is intended to present a related concept in a specific manner.

In some scenarios, a user needs to perform photographing based on a specified pose in a fixed guide box in a display picture of a mobile phone, and the fixed guide box in the display picture of the mobile phone is a guide box in a human shape. When a user pose is inconsistent with the specified pose in the fixed guide box, the mobile phone highlights an incorrect limb part through the fixed guide box, and reminds, in combination with a text and a voice, the user to adjust the pose, so that the user pose is consistent with the specified pose in the fixed guide box. Then, the mobile phone may obtain, through photographing, a photo of the user with an adjusted pose.

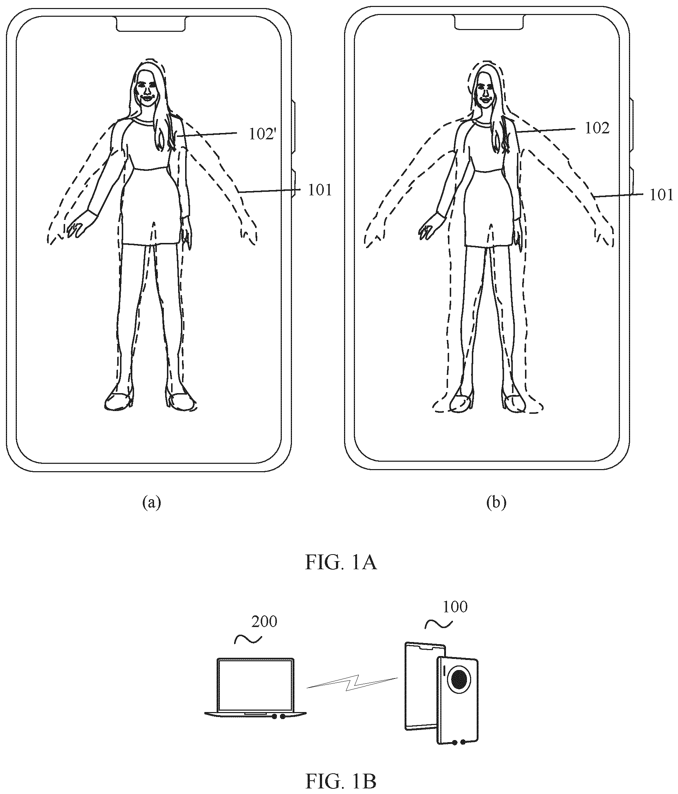

Each user has a different body shape, but a size of the guide box set in the display picture of the mobile phone is fixed. During photographing, the user needs to adjust the pose for a long time, which is likely to cause anxiety of the user and cause poor user experience. For example, as shown in (a) in FIG. 1A, a guide box 101 of a fixed size and a portrait 102' captured by the mobile phone by using a camera are displayed on an interface of the mobile phone. As shown in (b) in FIG. 1A, a guide box 101 of a fixed size and a portrait 102 captured by the mobile phone by using the camera are displayed on the interface of the mobile phone. In (b) in FIG. 1A, a body shape of a user is thin. As a result, even after the user adjusts a standing pose, the portrait 102 captured by the mobile phone still cannot well fit with a pose (for example, a frontal standing pose) set in the guide box 101, and a pose struck by the user differs greatly from the pose set in the guide box. In other words, it is difficult for the user to strike a corresponding pose following the guidance of the guide box, or the pose struck by the user based on the guide box is not an accurate pose.

To resolve the foregoing problem, embodiments of this application provide a guide box display method. In this method, a guide box in an electronic device may highly fit with a user portrait, and may dynamically change with the portrait, to help the user quickly and accurately strike a specific pose. This improves user experience and efficiency.

In a possible implementation, embodiments of this application may be applied to the electronic device, and the electronic device may implement the foregoing guide box display method. The electronic device may be a terminal device such as a personal computer (personal computer, PC), a mobile phone (mobile phone), a tablet computer (Pad), a notebook computer, a desktop computer, a notebook computer, a computer with a transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable device, or a vehicle-mounted device. A specific form of the electronic device is not specifically limited in embodiments of this application.

In another possible implementation, embodiments of this application may be applied to a system including a plurality of electronic devices, and the foregoing guide box display method may be implemented in the system. The system may be shown in FIG. 1B.

FIG. 1B is a diagram of a system to which a guide box display method is applied according to an embodiment of this application. As shown in FIG. 1B, the system includes a first electronic device 100 and a second electronic device 200.

Optionally, the first electronic device 100 may be, for example, a terminal device such as a personal computer, a mobile phone, a tablet computer, a notebook computer, a desktop computer, a notebook computer, a computer with a transceiver function, a virtual reality terminal device, an augmented reality terminal device, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, a wearable device, or a vehicle-mounted device. A specific form of the first electronic device 100 is not specially limited in embodiments of this application.

Optionally, the second electronic device 200 may be, for example, a terminal device such as a television, a PC, a mobile phone, a tablet computer, a VR terminal device, an AR terminal device, a wireless terminal in industrial control, a wireless terminal in self-driving, a wireless terminal in telemedicine, a wireless terminal in a smart grid, a wireless terminal in transportation security, a wireless terminal in a smart city, a wireless terminal in a smart home, a wearable device, or a vehicle-mounted device. A specific form of the second electronic device 200 is not specially limited in embodiments of this application.

In some embodiments, the first electronic device 100 may obtain a user portrait and/or a user body parameter, and determine a matched guide box based on the user portrait and/or the user body parameter. The first electronic device 100 displays the user portrait and the guide box, guides a user step by step to strike a specific pose in the guide box, and then performs data collection. After obtaining a data collection result in the specific pose of the user, the first electronic device may subsequently perform analysis based on the data collection result.

In some other embodiments, the first electronic device 100 obtains a user portrait and/or a user body parameter, and determines a matched guide box based on the user portrait and/or the user body parameter. The portrait and the determined guide box are sent to the second electronic device 200, the second electronic device 200 displays the portrait and the guide box, and the first electronic device guides a user step by step to strike a specific pose in the guide box, and then performs data collection. After obtaining a data collection result in the specific pose of the user, the first electronic device 100 may subsequently perform analysis based on the data collection result.

Optionally, the guide box in embodiments of this application is a guide box in a human shape.

Optionally, embodiments of this application may be further applied to a scenario in which a guide box is set, in a motion sensing game, to guide the user to perform a limb movement that matches the guide box.

Optionally, in different application scenarios, the guide box may be in another shape. For example, the guide box may alternatively be a guide box in an animal shape, and may guide the user to strike some animal-like poses.

Optionally, the first electronic device may generate a corresponding guide box based on the user body parameter. The first electronic device may further perform stretching transformation and/or scaling transformation on a preset guide box based on the user body parameter, to obtain a guide box corresponding to the user.

Optionally, different users may correspond to different guide boxes, and a size of the guide box varies with a distance between the user and the first electronic device.

For example, a user A has a corresponding guide box 1, and a user B has a corresponding guide box 2. When the user A is close to the first electronic device, the guide box on a display interface of the first electronic device is large. When the user A is far away from the first electronic device, the guide box on the display interface of the first electronic device is small.

Optionally, the portrait and the guide box may be displayed as different user interface (user interface, UI) effects. For example, a color of the portrait is different from a color of the guide box, and the guide box may further blink, so that the user can distinguish between the portrait and the guide box.

For example, the guide box may be displayed in different colors. For example, the guide box may automatically generate a color with a large contrast based on a color of user clothes. For example, when the user wears red clothes, the color of the guide box may be green, and the color of the user clothes is in a large contrast to the color of the guide box, so that the user determines whether a current pose of the user is consistent with a pose in the guide box.

Optionally, the first electronic device may prompt the user in a manner such as a voice, a picture, or a text.

For example, the specific pose specified by the first electronic device is that the user stands upright and raises the left arm by 45 degrees. When the left arm of the user is not raised, the first electronic device may give the user a prompt "Raise your left arm by 45 degrees" by using a voice. The first electronic device may alternatively superimpose another color on a left arm part in the guide box in a display picture, to prompt the user to raise the left arm by 45 degrees and place the left arm in the specific pose. The first electronic device may alternatively prompt, by using a text in the display picture, the user to raise the left arm by 45 degrees and place the left arm in the specific pose. For example, the first electronic device displays a text "Raise your left arm by 45 degrees" in the display picture.

Optionally, the first electronic device may prompt the user step by step.

For example, the first electronic device may first detect image quality of the display picture, for example, detect whether the display picture is bright or dark or the display picture is backlit. If the display picture is dark at this time, the user may be prompted by using a voice to adjust a position of the first electronic device, so that brightness of the display picture is appropriate. In addition, the first electronic device may detect a user position, for example, detect whether a full body of the user is in the display picture of the first electronic device. When the full body of the user is not in the display picture of the first electronic device, the user is prompted to adjust the position, so that the full body is in the display picture of the first electronic device. Finally, the first electronic device may detect a user pose. When the user pose does not match the specific pose in the guide box, the user is prompted to adjust the pose. In this way, the first electronic device prompts the user step by step, to increase a speed at which the user strikes the specific pose. This improves user experience.

Optionally, the first electronic device may send the user portrait and the guide box to the second electronic device, and the user strikes the specific pose based on a picture prompt in the second electronic device, so that visual experience of the user is improved.

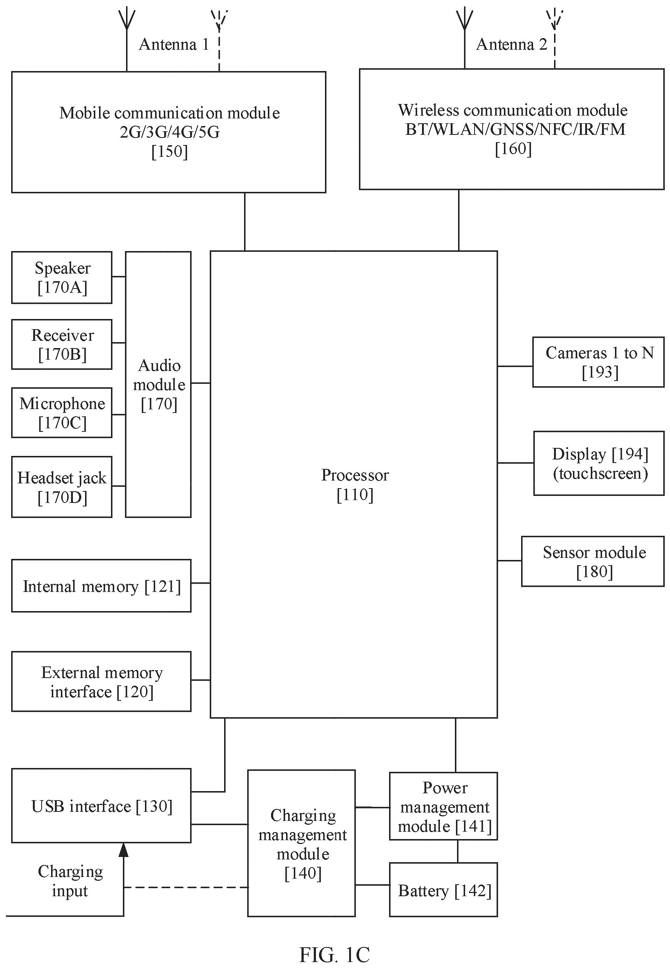

In this embodiment of this application, for example, the first electronic device is a mobile phone and the second electronic device is a television. FIG. 1C is a diagram of a structure of a mobile phone according to an embodiment of this application. Methods in the following embodiments may be implemented in a mobile phone having the foregoing hardware structure.

As shown in FIG. 1C, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a wireless communication module 160, an audio module 170, a speaker 170A, a receiver 170B, a microphone 170C, a headset jack 170D, a camera 193, a display 194, and the like. Optionally, the mobile phone may further include a mobile communication module 150 and the like.

It may be understood that the structure shown in this embodiment does not constitute a specific limitation on the mobile phone. In some other embodiments, the mobile phone may include more or fewer components than those shown in the figure, or a combination of some components, or splits from some components, or a different component layout. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the mobile phone. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a USB interface, or the like.

The charging management module 140 is configured to receive a charging input from a charger. While charging the battery 142, the charging management module 140 may further supply power to the mobile phone by using the power management module 141. The power management module 141 is configured to connect to the battery 142, the charging management module 140, and the processor 110. The power management module 141 may also receive an input of the battery 142 to supply power to the mobile phone.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

When the mobile phone includes the mobile communication module 150, the mobile communication module 150 may provide a wireless communication solution that includes 2G, 3G, 4G, 5G, or the like and that is applied to the mobile phone. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the mobile phone, and that includes a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), NFC, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the mobile phone are coupled, and the antenna 2 and the wireless communication module 160 in the mobile phone are coupled, so that the mobile phone can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The mobile phone implements a display function by using the GPU, the display 194, the application processor, and the like. The GPU is a microprocessor for image processing, and is connected to the display 194 and the application processor. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the mobile phone may include one or N displays 194, where N is a positive integer greater than 1.

The mobile phone may implement a photographing function by using the ISP, the camera 193, the video codec, the GPU, the display 194, the application processor, and the like. In some embodiments, the mobile phone may include one or N cameras 193, where N is a positive integer greater than 1.

The external memory interface 120 may be configured to connect to an external memory card, to extend a storage capability of the mobile phone. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the mobile phone and data processing. The internal memory 121 may include a program storage area and a data storage area. The program storage area may store an operating system, an application required by at least one function (for example, a sound playing function or an image playing function), and the like. The data storage area may store data (such as audio data and a phone book) and the like created during use of the mobile phone. In addition, the internal memory 121 may include a highspeed random access memory, or may include a non-volatile memory, for example, at least one magnetic disk storage device, a flash memory device, or a universal flash storage (universal flash storage, UFS).

The mobile phone may implement an audio function, for example, music playing or recording, by using the audio module 170, the speaker 170A, the receiver 170B, the microphone 170C, the headset jack 170D, the application processor, and the like.

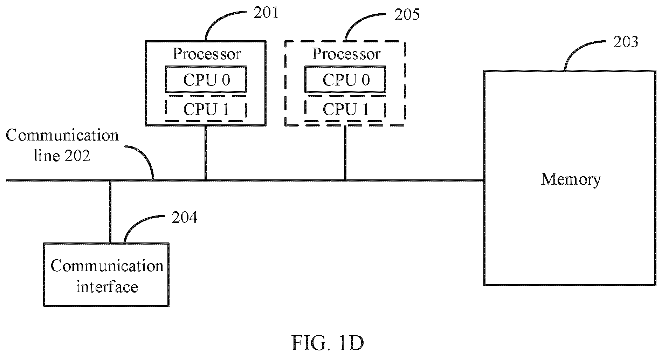

FIG. 1D is a diagram of a hardware structure of an electronic device according to an embodiment of this application. The electronic device may be the first electronic device and/or the second electronic device described above. The electronic device includes at least one processor 201, a communication line 202, a memory 203, and at least one communication interface 204. The memory 203 may alternatively be included in the processor 201.

The processor 201 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The communication line 202 may include a channel for transmitting information between the foregoing components.

The communication interface 204 is configured to communicate with another device. In this embodiment of this application, the communication interface may be a module, a circuit, a bus, an interface, a transceiver, or another apparatus that can implement a communication function, and is configured to communicate with the another device. Optionally, when the communication interface is a transceiver, the transceiver may be an independently disposed transmitter, and the transmitter may be configured to send information to the another device. Alternatively, the transceiver may be an independently disposed receiver, and is configured to receive information from the another device. Alternatively, the transceiver may be a component that integrates functions of sending and receiving information. Specific implementation of the transceiver is not limited in embodiments of this application.

The memory 203 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM), or another magnetic storage device, or any other medium that can be used for carrying or storing desired program code in a form of instruction or data structure and that can be accessed by a computer. However, no limitation is imposed thereon. The memory may exist independently, and is connected to the processor 201 through the communication line 202. The memory 203 may alternatively be integrated with the processor 201.

The memory 203 is configured to store computer-executable instructions for implementing the solutions of this application, and the processor 201 controls the execution. The processor 201 is configured to execute the computer-executable instructions stored in the memory 203, to implement a carrier transmission method provided in the following embodiments of this application.

Optionally, the computer-executable instructions in this embodiment of this application may also be referred to as application code, instructions, a computer program, or another name. This is not specifically limited in embodiments of this application.

During specific implementation, in an embodiment, the processor 201 may include one or more CPUs, for example, a CPU 0 and a CPU 1 in FIG. 1D.

During specific implementation, in an embodiment, the electronic device may include a plurality of processors, for example, the processor 201 and a processor 205 in FIG. 1D. Each of the processors may be a single-core (single-CPU) processor or a multi-core (multi-CPU) processor. Herein, the processor may be one or more devices, circuits, and/or processing cores configured to process data (for example, computer program instructions).

The electronic device may be a general-purpose device or a dedicated device. A type of the electronic device is not limited in embodiments of this application.

It may be understood that the structure shown in this embodiment of this application does not constitute a specific limitation on the first electronic device 100 and the second electronic device 200. In some other embodiments of this application, the first electronic device 100 and the second electronic device 200 may include more or fewer components than those shown in the figure, or a combination of some components, or splits from some components, or a different component layout. The components shown in the figure may be implemented by using hardware, software, or a combination of software and hardware.

The first electronic device and the second electronic device may establish a communication connection, and communicate by using the communication connection.

In this embodiment of this application, after establishing the communication connection, the first electronic device 100 and the second electronic device 200 communicate by using the communication connection. A user may send content in the first electronic device 100 to the second electronic device 200, or may send content in the second electronic device 200 to the first electronic device 100.

Embodiments of this application may be applied to scenarios such as sports health, body shape reconstruction, body shape measurement, self-service clothing purchase, and XR games. The following describes an example in which the method provided in embodiments of this application is applied to a mobile phone to perform body shape measurement on a user.

For example, the user triggers body shape measurement by using a body shape measurement application. As shown in FIG. 2A(a), the user may tap an icon of the body shape measurement application in the mobile phone, to trigger the mobile phone to jump to an interface 40 shown in FIG. 2A(b). A guide box 402 and a user portrait 403 are displayed on the interface 40. Optionally, a contour and a size of the guide box 402 may be preset, or may be determined based on a historical body parameter of the user. Optionally, the user body parameter includes but is not limited to a height, a weight, a gender, a circumference of each part of the user and a length of a limb, skeleton key points, and a hairstyle.

After detecting that the user taps the icon of the body shape measurement application shown in FIG. 2A(a), the mobile phone may capture a portrait by using a camera, and may display the portrait 403 on the interface 40 shown in FIG. 2A(b).

The mobile phone may determine whether the portrait 403 displayed on the interface 40 is a full-body portrait. In some examples, the portrait 403 displayed on the interface 40 is not a full-body portrait. For example, in FIG. 2A(b), the portrait 403 is at a lower position of the interface 40, and only a half-body portrait 403 is displayed on the interface 40. In this case, the contour of the guide box 402 may not change with the portrait, and the contour of the guide box 402 remains unchanged. For example, the contour of the guide box does not become larger as the portrait becomes larger.

Alternatively, in some other examples, although the portrait 403 displayed on the interface 40 is a full-body portrait, a distance between the full-body portrait and the guide box 402 is long, or a degree to which the full-body portrait fits with the guide box 402 is low. For example, the full-body portrait is at a lower-left-corner position of the interface 40, the guide box 402 is at a middle position of the interface 40, and the full-body portrait does not fit with the guide box 402. In this case, the contour of the guide box 402 does not change with the portrait, and the contour of the guide box 402 remains unchanged.

In some other examples, the user may adjust a relative position relationship between the user and the mobile phone. Correspondingly, parameters such as a display position and a size of the user portrait captured by the mobile phone on the interface 40 change accordingly. As shown in FIG. 2A(c), if the mobile phone detects that the portrait 403 displayed on the interface 40 is a full-body portrait, and the distance between the portrait 403 and the guide box 402 is short (for example, a distance d between a center point (a black dot) of the guide box 402 and a center point (a white dot) of the portrait 403 is less than a threshold), or a degree to which the full-body portrait 403 fits with the guide box 402 is high, optionally, the degree to which the full-body portrait 403 fits with the guide box 402 may be determined based on opening angles of limbs (arms and legs) of the portrait and opening angles of corresponding limbs in the guide box.

For example, when the portrait is at a central position of a screen of the mobile phone, when differences between the opening angles of the limbs (the arms and the legs) of the portrait and the opening angles of the corresponding limbs in the guide box are less than an angle threshold, the degree to which the portrait 403 fits with the guide box 402 is high. For example, the mobile phone detects that an opening angle of the left arm of the portrait is 43 degrees, an opening angle of the left arm in the guide box is 45 degrees, an angle difference between the two is 2 degrees, and the angle threshold is 3 degrees. In this case, a difference between the opening angle of the left arm of the portrait and the opening angle of the corresponding left arm in the guide box is less than the angle threshold, a degree to which a left arm part of the portrait fits with a corresponding left arm part in the guide box is high, and a pose photographing condition is met. By analogy, a fit degree of the full-body portrait is obtained.

In this case, the mobile phone may control, based on a body parameter (such as a height or fatness or thinness) corresponding to the portrait, the guide box 402 to fit with (or referred to as "be aligned with") the portrait 403. For example, as shown in FIG. 2A(d), the mobile phone may determine the contour of the guide box 402 based on the height and fatness or thinness of the portrait 403, and display an adjusted guide box 402 on the interface 40. Compared with the high and fat guide box 402 in a human shape in FIG. 2A(c), the adjusted guide box 402 in FIG. 2A(d) is shorter and thinner, and a size of the adjusted guide box 402 adapts to a real body shape of the user.

Then, if the mobile phone detects a change of the portrait 403, the mobile phone may control the guide box 402 to change with the portrait 403.

Optionally, that the guide box 402 changes with the portrait 403 includes but is not limited to becoming smaller as the portrait 403 becomes smaller, becoming larger as the portrait 403 becomes larger, and stretching and/or compressing as the portrait 403 becomes fatter or thinner.

For example, after the user adjusts a relative distance between the user and the mobile phone (for example, moves in a direction away from the mobile phone) as shown in FIG. 2A(d), the portrait 403 captured by the mobile phone becomes smaller, as shown in FIG. 2A(e). Correspondingly, the guide box 402 becomes smaller as the portrait 403 becomes smaller.

For another example, after the user adjusts the relative distance between the user and the mobile phone (for example, approaches the mobile phone), the portrait 403 captured by the mobile phone becomes larger. Correspondingly, the guide box 402 becomes larger as the portrait 403 becomes larger.

Optionally, the relative position relationship between the user and the mobile phone includes but is not limited to the relative distance, a relative angle of depression, a relative angle of elevation, and a relative height. For descriptions of parameters such as the relative angle of depression and the relative height and corresponding scenarios, refer to subsequent embodiments.

In some examples, after the relative position relationship between the user and the mobile phone is appropriate, the user may adjust a pose based on the guide box 402 displayed on the interface 40, so that the mobile phone can photograph a correct user pose. For example, as shown in (a) in FIG. 2B, the guide box 402 and the portrait 403 are displayed on the interface 40. Initially, an arm of the user is not raised. The user may raise the arm based on a pose corresponding to the guide box 402. As shown in (b) in FIG. 2B, a pose corresponding to a portrait 403' is consistent with the pose (a frontal standing pose) corresponding to the guide box 402. After detecting that the pose corresponding to the portrait is consistent with the pose corresponding to the guide box 402, the mobile phone may automatically perform photographing, or the user may tap a photographing button to control the mobile phone to perform photographing. In this way, the mobile phone can obtain a photo of the user in an accurate frontal standing pose.

The following describes technical details in this embodiment of this application by using an example in which an application is a body shape measurement application.

Embodiment 1: A mobile phone determines whether a portrait displayed on an interface is a full-body portrait.

In some embodiments of this application, that the mobile phone may determine whether a portrait 403 displayed on an interface 40 is a full-body portrait may be implemented as the following steps.

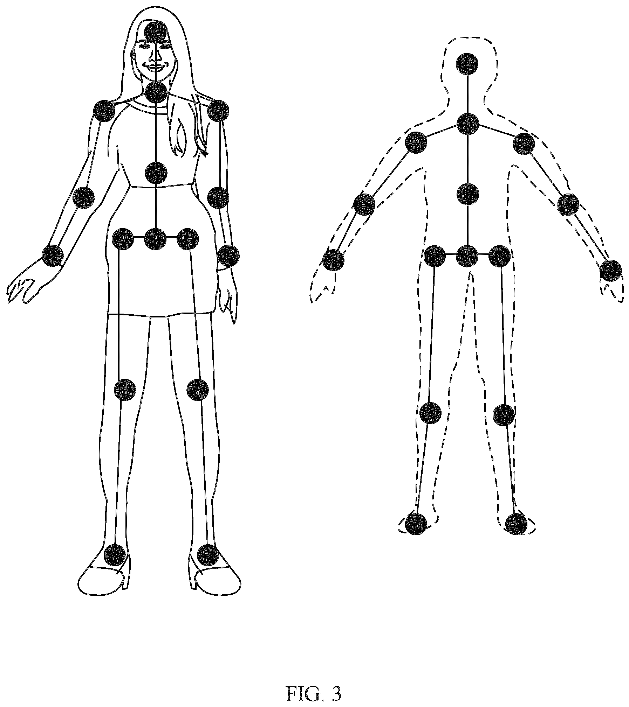

The mobile phone captures a user portrait by using a camera, and extracts information about human skeleton key points in the portrait through image processing, to obtain coordinates of the skeleton key points on a two-dimensional plane corresponding to a screen of the mobile phone. Optionally, the skeleton key points include key parts such as shoulders, elbows, wrists, a neck, a head, bases of thighs, knees, and feet. As shown in FIG. 3, the mobile phone may obtain 17 skeleton key points of a user. Optionally, the mobile phone may obtain more or fewer skeleton key points of the user.

In some embodiments of this application, the mobile phone may detect the skeleton key points in the portrait, and determine, based on the skeleton key points in the portrait, whether a full-body portrait of the user is on the screen of the mobile phone. For example, if the portrait displayed on the screen of the mobile phone includes the 17 skeleton key points, it is determined that the portrait is a full-body portrait.

Optionally, as shown in (a) in FIG. 4, when the portrait displayed on the screen of the mobile phone does not include all the 17 skeleton key points, it means that the portrait is not a full-body portrait. In this case, the mobile phone may remind the user to adjust a relative position relationship between the user and the mobile phone, so that the mobile phone can capture the full-body portrait of the user and photograph a full body. In some examples, the mobile phone may prompt the user by using a voice to move a position. As shown in (b) in FIG. 4, after the user adjusts the relative position relationship between the user and the mobile phone, the full-body portrait captured by the camera of the mobile phone is on the screen of the mobile phone.

For another example, in FIG. 2A(a), when the portrait 403 displayed on the screen of the mobile phone does not include all the 17 skeleton key points, it means that the portrait is not a full-body portrait. In this case, the mobile phone may remind the user to adjust the relative position relationship between the user and the mobile phone. As shown in FIG. 2A(c), after the user adjusts the relative position relationship between the user and the mobile phone, the full-body portrait 403 captured by the camera of the mobile phone is on the screen of the mobile phone.

### Embodiment 2:

In this embodiment, in a process of capturing a user portrait, a mobile phone may prompt a user to adjust a relative position relationship between the user and the mobile phone, so as to adjust a display size and/or position of the portrait on a screen.

Optionally, the mobile phone may calculate a proportion of a size of the portrait displayed on the screen of the mobile phone to a size of the screen of the mobile phone. When the proportion is not appropriate, the mobile phone reminds the user to move a position, so that the size of the portrait on the screen is appropriate. For example, when the proportion of the portrait to the screen of the mobile phone in a display picture of the mobile phone is greater than 0.3 or less than 0.5, a portrait proportion is appropriate.

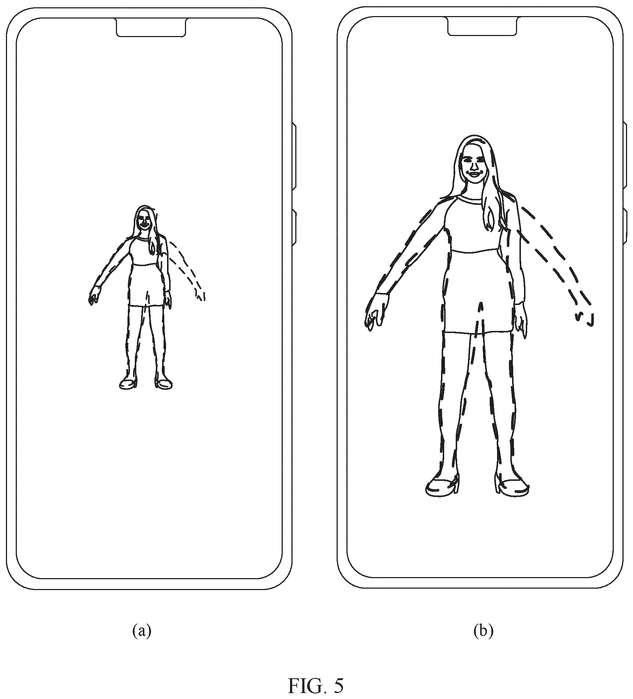

For example, as shown in (a) in FIG. 5, when the proportion of the portrait to the screen of the mobile phone on a display interface of the mobile phone is less than 0.3, it indicates that the size of the portrait is excessively small, and the mobile phone may prompt the user to move to a position that is close to the mobile phone, to increase the display size of the portrait on the screen. As shown in (b) in FIG. 5, after the user approaches the mobile phone, the mobile phone displays, on the screen, a large-sized portrait and a guide box that becomes larger as the portrait becomes larger, and a size of the portrait is roughly equal to a size of the guide box. In this way, the mobile phone may take a photo including a larger-sized portrait, so that more accurate photo information can be obtained based on the large-sized portrait. For example, when body fat of the user is analyzed and calculated based on the portrait photo, the mobile phone can obtain more accurate body parameter information such as a user body shape based on the large-sized portrait, and further obtain a more accurate body fat indicator based on each piece of body parameter information.

In some examples, after calculating the body fat of the user based on the photo of the user, the mobile phone may advise the user to perform corresponding exercise, so that the body fat of the user is within a healthy range.

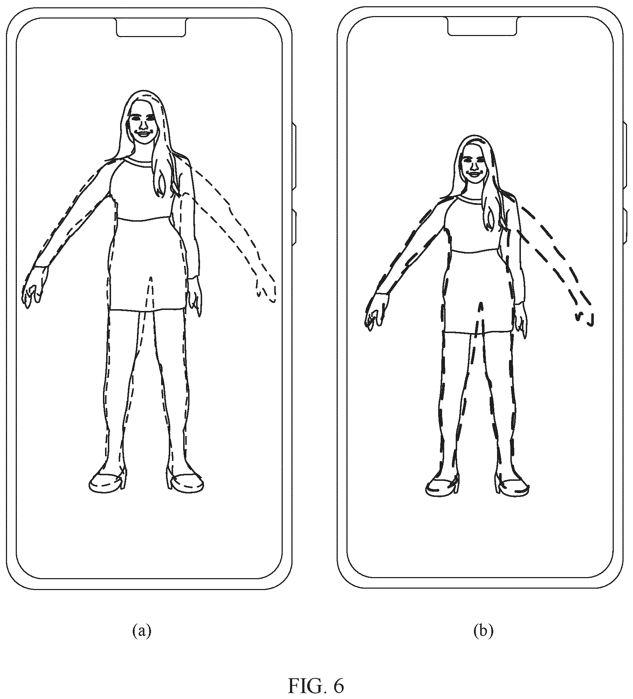

For another example, as shown in (a) in FIG. 6, when the proportion of the portrait to the screen of the mobile phone in the display picture of the mobile phone is greater than 0.5, it indicates that the size of the portrait is excessively large, and the mobile phone may prompt the user to move to a position that is far away from the mobile phone, to reduce the display size of the portrait on the screen. As shown in (b) in FIG. 6, after the user moves away from the mobile phone, the mobile phone displays, on the screen, a small-sized portrait and a preset guide box that becomes smaller as the portrait becomes smaller, and a size of the portrait is roughly equal to a size of the guide box.

For another example, as shown in FIG. 2A(b), when the portrait exceeds a lower edge of the screen of the mobile phone, the mobile phone may prompt the user to move in a direction away from the mobile phone. After the user moves away from the mobile phone, as shown in FIG. 2A(c), a half-body portrait on an interface 40 is correspondingly adjusted to a full-body portrait, and the portrait is correspondingly adjusted and displayed at a central position of the screen of the mobile phone.

In some embodiments, the mobile phone may further determine whether a position of the portrait on the screen of the mobile phone meets a photographing condition. Optionally, when the portrait is in a middle position of the screen of the mobile phone, the photographing condition is met.

Based on impact of a placement height and an angle of depression or elevation for placement of the mobile phone on the display position of the portrait on the screen, when the photographing condition is not met, the mobile phone may prompt the user to adjust a relative angle of depression, a relative angle of elevation, and a relative height between the user and the mobile phone, to adjust the display position of the portrait on the screen.

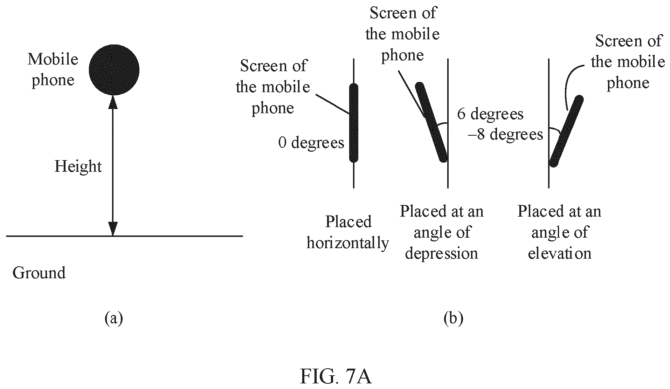

For example, as shown in (a) in FIG. 7A, when the placement height of the mobile phone is 1 m to 1.3 m away from the ground, the placement height of the mobile phone is moderate. When the placement height of the mobile phone is less than 1 m away from the ground, the placement position of the mobile phone is excessively low. When the placement height of the mobile phone is greater than 1.3 m away from the ground, the placement position of the mobile phone is excessively high. As shown in (b) in FIG. 7A, when an included angle between the screen of the mobile phone and a vertical plane (a plane perpendicular to a horizontal plane) is 0 degrees, the mobile phone is placed horizontally. When the screen of the mobile phone faces the ground, and the included angle between the screen of the mobile phone and the vertical plane is greater than 0 degrees, the mobile phone is placed at an angle of depression. For example, when the included angle between the screen of the mobile phone and the vertical plane is 6 degrees, the mobile phone is placed at an angle of depression of 6 degrees. When the screen of the mobile phone faces away from the ground, and the included angle between the screen of the mobile phone and the vertical plane is less than 0 degrees, the mobile phone is placed at an angle of elevation. For example, when the included angle between the screen of the mobile phone and the vertical plane is -8 degrees, the mobile phone is placed at an angle of elevation of -8 degrees. Certainly, the values herein are only examples. During actual application, thresholds corresponding to the angle of depression, the angle of elevation, and the height may alternatively be determined based on an actual application scenario, and the user is prompted, based on the thresholds, to adjust the relative position relationship between the user and the mobile phone.

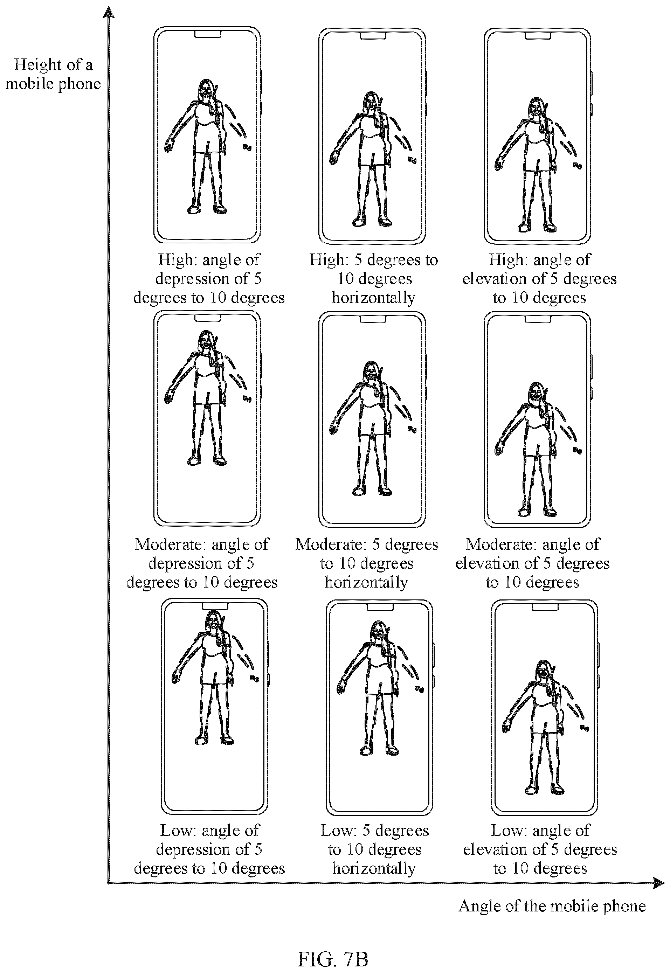

For example, FIG. 7B shows display positions of the portrait in the display picture of the mobile phone when the user is at a same position but the mobile phone is placed at different heights and/or the mobile phone is placed at different angles of depression or elevation. When the mobile phone is placed at an excessively high position or at a large angle of elevation, the portrait may be at a lower position of the screen of the mobile phone, and a lower boundary of the portrait may be in touch with a lower boundary of the screen of the mobile phone, or a lower boundary of the portrait is close to a lower boundary of the screen of the mobile phone. When the mobile phone is placed at an excessively low position or at a large angle of depression, the portrait may be at an upper position of the screen of the mobile phone, and an upper boundary of the portrait may be in touch with an upper boundary of the screen of the mobile phone, or an upper boundary of the portrait is close to an upper boundary of the screen of the mobile phone. When the portrait is not at the central position of the screen of the mobile phone, the portrait may exceed the screen, a complete portrait cannot be obtained, and visual experience of the user is also poor. In addition, from the perspective of an imaging effect, when the portrait is at the central position of the screen of the mobile phone, perspective distortion caused by photographing during body shape measurement is smaller, and the portrait is closer to a real portrait proportion, which can improve accuracy of a body shape analysis algorithm.

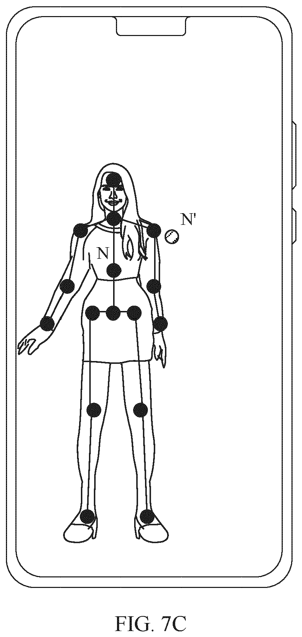

Optionally, when a distance between coordinates of a skeleton key point (for example, an abdomen point) in a portrait center and coordinates of a screen center is within a distance threshold, it is determined that the portrait is at the central position of the screen of the mobile phone. For example, as shown in FIG. 7C, a coordinate position of the abdomen point in the portrait center is a point N, and a coordinate position of the screen center is a point N'. In this case, the distance threshold is 5 mm. If a distance between the point N and the point N' is less than 5 mm, the portrait is at the central position of the screen of the mobile phone. If a distance between the point N and the point N' is greater than or equal to 5 mm, the portrait is not at the central position of the screen of the mobile phone.

In this case, the user may adjust the placement height of the mobile phone or a magnitude of the angle of depression or elevation, so that the portrait is displayed at the central position of the screen of the mobile phone. Optionally, a method for adjusting, by the user based on the position of the portrait in the mobile phone, the placement height of the mobile phone or the magnitude of the angle of depression or elevation may be specifically shown in Table 1.

**Table 1**

| Position of a portrait displayed on a screen of a mobile phone | Angle of depression or elevation of the mobile phone | Prompts from the mobile phone |
|---|---|---|
| An upper edge of the portrait is in touch with or close to an upper edge of the screen of the mobile phone | Angle of depression<7 degrees | Raise a height of the mobile phone |
| | Angle of depression>7 degrees | Decrease the angle of depression of the mobile phone |
| | Angle of elevation<7 degrees | Increase the angle of elevation of the mobile phone |
| | Angle of elevation>7 degrees | Lower a height of the mobile phone |
| A lower edge of the portrait is in touch with or close to a lower edge of the screen of the mobile phone | Angle of depression<7 degrees | Increase the angle of depression of the mobile phone |
| | Angle of depression>7 degrees | Lower a height of the mobile phone |
| | Angle of elevation<7 degrees | Lower a height of the mobile phone |
| | Angle of elevation>7 degrees | Decrease the angle of elevation of the mobile phone |
| The upper and lower edges of the portrait are in touch with or close to the upper and lower edges of the screen of the mobile phone | Prompt a user to stay away from a position of the mobile phone | |

As shown in Table 1, when the upper edge of the portrait is in touch with or close to the upper edge of the screen of the mobile phone, if the angle of depression of the mobile phone is less than 7 degrees, the mobile phone prompts the user to raise the height of the mobile phone, so that the portrait is displayed at the central position of the screen of the mobile phone; if the angle of depression of the mobile phone is greater than 7 degrees, the mobile phone prompts the user to decrease the angle of depression of the mobile phone, so that the portrait is displayed at the central position of the screen of the mobile phone; if the angle of elevation of the mobile phone is less than 7 degrees, the mobile phone prompts the user to increase the angle of elevation of the mobile phone, so that the portrait is displayed at the central position of the screen of the mobile phone; or if the angle of elevation of the mobile phone is greater than 7 degrees, the mobile phone prompts the user to lower the height of the mobile phone, so that the portrait is displayed at the central position of the screen of the mobile phone.

When the lower edge of the portrait is in touch with or close to the lower edge of the screen of the mobile phone, if the angle of depression of the mobile phone is less than 7 degrees, the mobile phone prompts the user to increase the angle of depression of the mobile phone, so that the portrait is displayed at the central position of the screen of the mobile phone; if the angle of depression of the mobile phone is greater than 7 degrees, the mobile phone prompts the user to lower the height of the mobile phone, so that the portrait is displayed at the central position of the screen of the mobile phone; if the angle of elevation of the mobile phone is less than 7 degrees, the mobile phone prompts the user to lower the height of the mobile phone, so that the portrait is displayed at the central position of the screen of the mobile phone; or if the angle of elevation of the mobile phone is greater than 7 degrees, the mobile phone prompts the user to decrease the angle of elevation of the mobile phone, so that the portrait is displayed at the central position of the screen of the mobile phone.

For example, as shown in FIG. 2A(b), when the half-body portrait is in a lower left corner of the screen of the mobile phone, and the angle of depression of the mobile phone is less than 7 degrees, the mobile phone may prompt the user to increase the angle of depression of the mobile phone. After the user increases the angle of depression of the mobile phone, as shown in FIG. 2A(c), the half-body portrait is correspondingly adjusted to the full-body portrait, and the full-body portrait is displayed at the central position of the screen of the mobile phone.

When the upper and lower edges of the portrait touch or are close to the upper and lower edges of the screen of the mobile phone, the mobile phone reminds the user to stay away from the position of the mobile phone, so that the portrait is displayed at the central position of the screen of the mobile phone.

Optionally, the mobile phone may alternatively remind the user when the angle of depression or elevation of the mobile phone is greater than or less than 5 degrees. This is not specifically limited in this embodiment of this application.

In some embodiments, the mobile phone may be further placed in a gimbal. When determining that the angle of depression or elevation and/or the placement height of the mobile phone need/needs to be adjusted, the mobile phone may notify the gimbal, and the gimbal drives the mobile phone to automatically rotate, to adjust the angle of depression or elevation and the height of the mobile phone to an appropriate position, so that the portrait is displayed at the central position of the screen of the mobile phone.

**In** some embodiments, a first electronic device may be a device having an automatic focus function. When determining that an angle of depression or elevation and/or a placement height of the first electronic device need/needs to be adjusted, the first electronic device may automatically focus, so that a portrait is displayed at a central position of a screen of the first electronic device. Optionally, the device having the automatic focus function includes but is not limited to body shape measurement and a mobile phone.

Optionally, the method for adjusting the placement height of the mobile phone or the magnitude of the angle of depression or elevation may be another manner. This is not specifically limited in this embodiment of this application.

As described above, the mobile phone may control, based on a real body parameter of the user, the guide box to change with the portrait, so that the guide box matches the real body shape of the user. The following provides several examples of adjusting the guide box.

Embodiment 3: In this embodiment, a mobile phone may calculate a size of a portrait, and stretch and/or scale a guide box based on the size of the portrait, so that the guide box on an interface of the mobile phone fits with the portrait to a high degree.

In a possible implementation, the mobile phone may calculate a minimum bounding rectangle (envelope box) of the portrait based on a height and a width of the displayed portrait, and perform stretching transformation and/or scaling transformation on the guide box based on a length and a width of the minimum bounding rectangle, to obtain an adjusted guide box that matches a real body shape of a user.

Optionally, the minimum bounding rectangle is a rectangle that is in a maximum range of a two-dimensional shape and that is represented by two-dimensional coordinates, that is, a rectangle whose lower boundary is determined by a maximum horizontal coordinate, a minimum horizontal coordinate, a maximum vertical coordinate, and a minimum vertical coordinate in vertices of a given two-dimensional shape.

For example, as shown in FIG. 8, the mobile phone may obtain skeleton key points of the portrait, and calculate an envelope box 1 of the portrait by using a plurality of skeleton key points in the portrait as portrait boundaries. In the skeleton key points of the portrait, a position corresponding to a skeleton key point A is uppermost, and a side on which the skeleton key point A is located may serve as an upper boundary of the envelope box; a position corresponding to a skeleton key point B is leftmost, and a side on which the skeleton key point B is located may serve as a left boundary (denoted as a side b) of the envelope box; a position corresponding to a skeleton key point C is rightmost, and a side on which the skeleton key point C is located may serve as a right boundary of the envelope box; and a position corresponding to a skeleton key point D is lowermost, and a side on which the skeleton key point D is located may serve as a lower boundary (denoted as a side d) of the envelope box.

Similarly, the mobile phone may obtain skeleton key points of the guide box, and calculate an envelope box 2 of the guide box by using a plurality of skeleton key points in the guide box as portrait boundaries.

The mobile phone performs stretching transformation and/or scaling transformation on the envelope box 2 based on a length and a width of the envelope box 1, to obtain a transformed envelope box 2. A width of the transformed envelope box 2 is equal to the width of the envelope box 1, and the side d is equal to a side d'. In addition, a length of the transformed envelope box 2 is equal to the length of the envelope box 1. That is, a length of the side b is equal to a length of a side b'.

For example, as shown in FIG. 2A(c), the mobile phone may calculate envelope boxes corresponding to a guide box 402 and a portrait 403, and perform stretching transformation and/or scaling transformation on the envelope box corresponding to the guide box 402. After stretching transformation and/or scaling transformation, as shown in FIG. 2A(d), the mobile phone may display a transformed guide box 402 on an interface 40. That the guide box 402 fits with the portrait 403 to a high degree means that a contour and a size of the guide box 402 match the real body shape of the user, and the user may quickly strike an accurate pose based on the guide box 402, so that user experience is improved.

For another example, as shown in FIG. 2A(e), after the user moves in a direction away from the mobile phone, the mobile phone may calculate envelope boxes corresponding to the guide box 402 shown in FIG. 2A(d) and a portrait 403 shown in FIG. 2A(e), and perform stretching transformation and/or scaling transformation on the envelope box corresponding to the guide box 402 in FIG. 2A(d). After stretching transformation and/or scaling transformation, as shown in FIG. 2A(e), the mobile phone may display a transformed guide box 402 on the interface 40. The transformed guide box 402 fits with the new portrait 403 to a high degree, and the user may quickly strike an accurate pose based on the transformed guide box 402.

In an embodiment, the mobile phone may alternatively calculate the envelope box 1 of the portrait based on a contour of the captured portrait, and calculate the envelope box 2 of the guide box based on a contour of the guide box. This is not specifically limited in embodiments of this application.

In this embodiment of this application, heights and lengths of the envelope boxes corresponding to the guide box and the portrait are calculated, and the size of the guide box is stretched and/or scaled, so that a height and a width of the guide box on the interface of the mobile phone are equal to the height and the width of the portrait, the guide box fits with the portrait to a high degree, and a calculation method is simple. In addition, that the guide box 402 fits with the portrait to a high degree means that the contour and the size of the guide box match the real body shape of the user, and the user may quickly strike an accurate pose based on the guide box 402, so that visual experience of the user in, for example, a photographing process is improved.

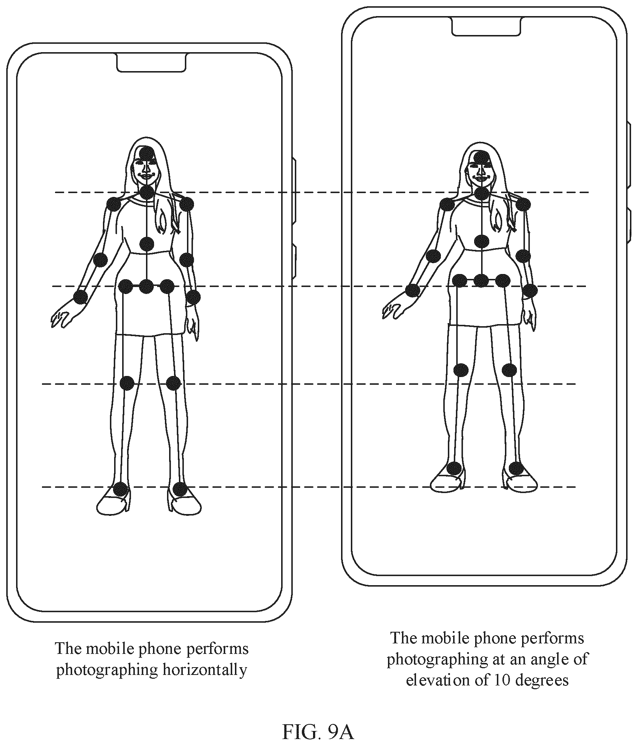

Embodiment 4: In this embodiment, it is considered that in some scenarios, deformation may exist between a plurality of portraits captured by a mobile phone due to different photographing angles. For example, as shown in FIG. 9A, when the mobile phone photographs, at a horizontal angle and at an angle of elevation of 10 degrees, a same user who is at a same position, corresponding skeleton key points in two portraits displayed by the mobile phone cannot be aligned, and the portrait undergoes stretching deformation. In a possible implementation, the mobile phone may perform perspective transformation on a plurality of skeleton key points of the guide box based on a plurality of skeleton key points of the portrait, so that a transformed guide box fits with the portrait to a higher degree.

The perspective transformation is to project an image onto a new view plane, and this process includes: 1. converting a two-dimensional coordinate system into a three-dimensional coordinate system; and 2. projecting the three-dimensional coordinate system onto a new two-dimensional coordinate system. This process is a non-linear transformation process. For example, a quadrilateral is obtained after a diamond undergoes non-linear transformation, but opposite sides may not be parallel.

The mobile phone may calculate a perspective matrix based on the plurality of skeleton key points in the guide box and the plurality of corresponding skeleton key points in the portrait, and perform perspective transformation on another skeleton key point in the guide box based on the perspective matrix, so that the transformed guide box can better fit with the portrait.

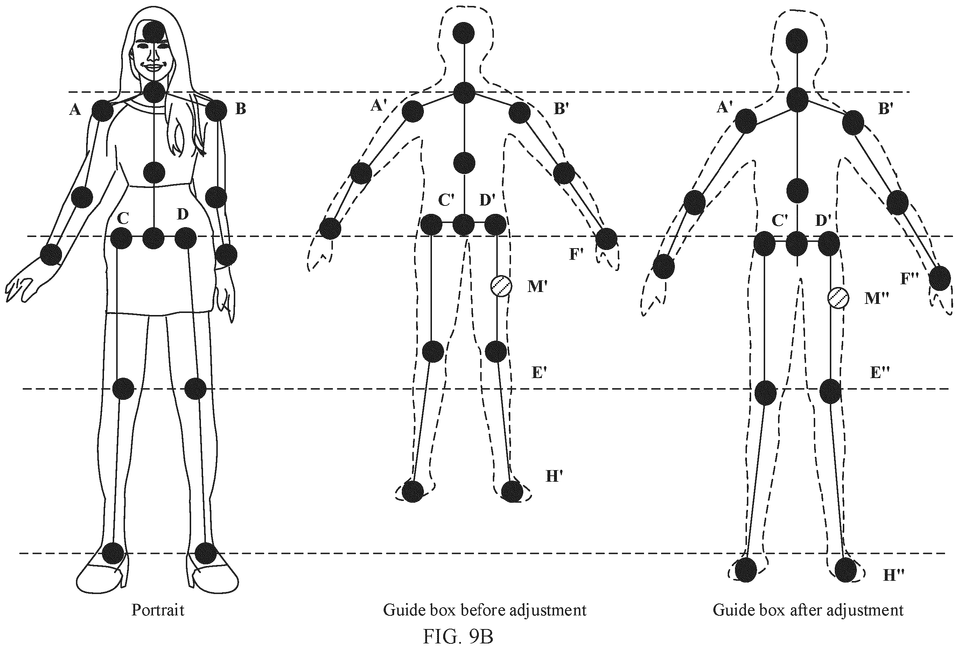

For example, the mobile phone calculates the perspective matrix based on four groups of corresponding skeleton key points. As shown in FIG. 9B, the mobile phone may respectively transform skeleton key points A', B', C', and D' in the guide box to coordinate positions of skeleton key points A, B, C, and D in the portrait through perspective transformation, to obtain the perspective matrix.

Then, the mobile phone may perform perspective transformation on each pixel in the guide box based on the perspective matrix, to obtain a guide box that fits with the portrait to a high degree. For example, as shown in FIG. 9B, the mobile phone transforms a skeleton key point F' at a wrist position of the guide box to F", transforms a skeleton key point E' at a knee position to E", transforms a skeleton key point H' at a toe position to H", and transforms a point M' at a thigh position to M". By analogy, a guide box after perspective transformation is obtained.

In this way, for the same user, in different photographing distances and at different photographing angles, even if the portrait undergoes stretching deformation (perspective deformation), the mobile phone may still perform perspective transformation on the guide box based on a deformed portrait, so that a deviation between the guide box and the portrait is reduced, and the guide box still matches a real body shape of the user.

Embodiment 5: In this embodiment, a mobile phone may perform portrait segmentation to obtain a plurality of portrait parts, and fine-tune sizes and contours of parts, in the guide box, corresponding to the plurality of portrait parts, to improve adjustment precision of a size and a contour of a guide box.

In a possible implementation, the mobile phone may perform, based on a length and a width of the portrait part obtained through segmentation, stretching transformation and/or scaling transformation on the corresponding part in the guide box, so that a transformed guide box fits with a portrait to a higher degree. Alternatively, the mobile phone may perform perspective transformation on a skeleton key point of the corresponding part in the guide box based on a length and a width of the portrait part obtained through segmentation. For example, for an arm part obtained through portrait segmentation, the mobile phone may perform perspective transformation on a skeleton key point of an arm part in the guide box based on a skeleton key point of the arm part in the portrait, so that a transformed guide box fits with the portrait to a higher degree. Alternatively, the mobile phone may perform, based on a length and a width of the portrait part obtained through segmentation, stretching transformation and/or scaling transformation on the corresponding part in the guide box, and then perform perspective transformation on a stretched and/or scaled guide box, so that the transformed guide box fits with the portrait to a higher degree.

Optionally, the mobile phone may segment the portrait into the plurality of portrait parts, for example, an arm part, a thigh part, a shank part, and a waist part.

For example, perspective transformation is performed on corresponding human body parts in the guide box of the mobile phone. The mobile phone may calculate a proportion of a length of each portrait part to a portrait height (which may be referred to as a length proportion), and a proportion of a width of each portrait part to the portrait height (which may be briefly referred to as a width proportion). The corresponding part in the guide box is stretched and/or scaled based on the length and width proportions of each portrait part, and then perspective transformation is performed on the stretched and/or scaled guide box.

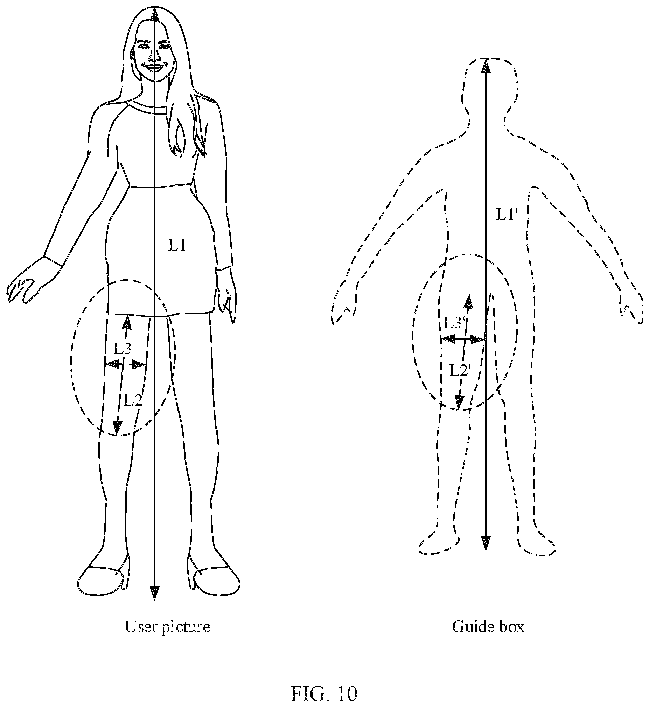

For example, as shown in FIG. 10, the portrait height is L1, a length of a left thigh part obtained through portrait segmentation is L2, and a width thereof is L3. L2/L1 is a proportion of the length of the left thigh part of the portrait to the portrait height, and L3/L1 is a proportion of the width of the left thigh part of the portrait to the portrait height. A height of the guide box is L1', a length of a left thigh part, in the guide box, obtained through segmentation of the guide box is L2', and a width thereof is L3'. The length L2' of the left thigh part in the guide box is stretched and/or scaled, so that a value of L2'/L1' (a length proportion corresponding to a left thigh in the guide box) is equal to a value of L2/L1 (a length proportion corresponding to a left thigh in the portrait); and the width L3' of the left thigh part in the guide box is stretched and/or scaled, so that a value of L3'/L1' is equal to a value of L3/L1. In this case, a length proportion and a width proportion of each part in the guide box are equal to the length proportion and the width proportion of each part in the portrait.

In this embodiment, personalized guide boxes may be generated for different user body shapes. When fat and thin parts of different users are different, a contour of a corresponding part in the guide box can fit a contour of a corresponding part of a portrait to a greatest extent, so that user experience is improved.

### Embodiment 6:

The foregoing embodiment is mainly described by using an example in which a mobile phone determines a user body parameter (a height, fatness, thinness, or the like) based on a portrait captured in real time, and adjusts a contour and a size of a guide box based on the body parameter. In this embodiment, the mobile phone may further generate a corresponding guide box based on a historical body parameter of a user, or select, from a sample library based on a historical body parameter of a user, a guide box that is generated and that matches a user body shape, and then perform perspective transformation on the matched guide box.

The historical body parameter of the user may include but is not limited to information such as a height, a weight, a gender, an age, a circumference of each part of the user and a length of a limb, skeleton key points, and a hairstyle of the user.

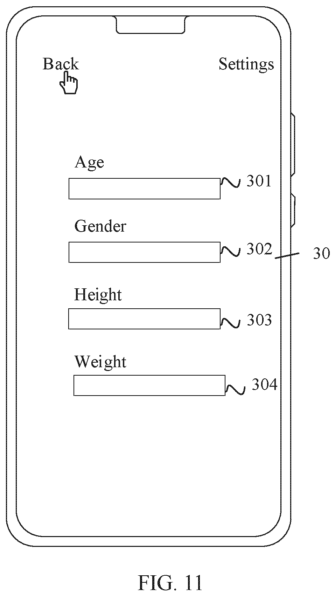

Optionally, before performing photographing for body shape analysis, the user may set user body shape information such as the height, the weight, and the gender on a setting interface. Alternatively, the mobile phone may automatically obtain the user body shape information based on authorization of the user. For example, FIG. 11 is a diagram of a setting interface 30 according to an embodiment of this application. The setting interface 30 includes an age input box 301, a gender input box 302, a height input box 303, and a weight input box 304.

The age input box 301 is used to input an age of a user. For example, a user A is 18 years old.

The gender input box 302 is used to input a gender of the user. For example, the user A is a female.

The height input box 303 is used to input a height of the user. For example, a height of the user A is 160 cm.

The weight input box 304 is used to input a height of the user. For example, a weight of the user A is 45 kg.

In some examples, after filling in information in the age input box 301, the gender input box 302, the height input box 303, and the weight input box 304, the user may tap a "Back" button to enter, for example, the photographing interface 40 shown in FIG. 2A(b) to perform photographing.

In some examples, when the user A performs photographing, if body shape information of the user A is the same as user body shape information during previous photographing, and a time interval is short, it indicates that a user body shape does not change, or a user body shape changes to a small degree. In this case, the mobile phone may directly select, from a sample library, a guide box used during first photographing as a guide box used during second photographing. For example, user information of the user A during the first photographing and the second photographing is both 18 years old, a female, the height of 160 cm, and the weight of 45 kg, and a time interval between the second photographing and the first photographing is two days. In this case, the mobile phone may directly select, from the sample library, the guide box used during the first photographing as the guide box used during the second photographing, and does not need to recalculate the guide box. Subsequently, when a portrait changes as a relative position relationship between the user and the mobile phone changes, the mobile phone may dynamically adjust the guide box based on the portrait change, so that the guide box fits with the portrait to a high degree, which helps guide the user to quickly strike a corresponding pose. For example, after the mobile phone selects the guide box from the sample library and displays the guide box, when the portrait on the interface changes (for example, becomes larger) subsequently, the mobile phone may perform perspective transformation on a skeleton key point in the guide box based on a skeleton key point of the user portrait, to implement dynamic display of the guide box.

In some other examples, if user information of the user A during current photographing is different from login information entered last time, or a time interval is long, it means that the user body shape changes. In this case, the mobile phone may re-detect a user body parameter and the user portrait, to generate a new guide box that matches the user A. For example, the user information of the user A during the first photographing is 18 years old, a female, the height of 160 cm, and the weight of 45 kg, and the user information of the user A during the first photographing is 18 years old, a female, the height of 160 cm, and a weight of 50 kg; or the user information during the second photographing is the same as that during the first photographing, but the time interval is 30 days. In this case, the mobile phone may re-detect the user body parameter and the user portrait, to generate the new guide box that matches the user A. Alternatively, the mobile phone may select, from the sample library, the guide box used during the first photographing, and perform stretching transformation and/or compression transformation on the guide box used during the first photographing based on a re-detected user body parameter and user portrait, to generate the new guide box that matches the user A.

Optionally, the mobile phone may store the user body parameter, and store, in the sample library, a guide box that is correspondingly generated based on the user body parameter.

In this embodiment of this application, the mobile phone may determine the guide box with reference to the historical body parameter of the user, so that the guide box corresponding to the user can be more quickly and accurately determined, to improve efficiency.

In some embodiments, a first electronic device may alternatively be an electronic device having a ranging function, for example, an electronic device equipped with a rangefinder or depth (time of flight, TOF) body shape measurement. For example, the electronic device is a camera device. After detecting a real distance between the camera device and the user, the camera device may generate a three-dimensional portrait with reference to the historical body parameter of the user. The three-dimensional portrait includes three-dimensional skeleton key points. The camera device may set a specific pose for the three-dimensional portrait, calculate an extrinsic parameter of the camera device based on a perspective-n-point (perspective-n-point, PNP) algorithm, and project a three-dimensional guide box formed by the three-dimensional portrait onto a two-dimensional screen of the mobile phone, so as to display the three-dimensional guide box on the screen of the mobile phone. The user strikes the specific pose based on the three-dimensional guide box. In this way, because the three-dimensional guide box is three-dimensional reconstruction of a real user, a contour of the three-dimensional guide box is more consistent with a contour of the user. Compared with a two-dimensional guide box, the three-dimensional guide box is more delicate and realistic, and fits with the user portrait to a higher degree, so that the user can be guided to strike a more accurate pose.

Embodiment 7: When a user pose does not match a specific pose in a guide box, a mobile phone may inform a user in a manner such as a voice, a picture, or a text, that the pose is incorrect, and guide the user to strike a correct pose. Certainly, a manner in which the mobile phone prompts the user is not limited to the foregoing manner, and the mobile phone may alternatively prompt the user to adjust a photographing pose in a plurality of manners such as a voice and a text.

For example, FIG. 12 is a diagram of a photographing display interface 40 according to an embodiment of this application. The specific pose in the guide box is that two arms are raised by 45 degrees, and a current pose of the user is that the left arm is raised by 45 degrees, and the right arm is not raised. In this case, the mobile phone may give the user a prompt "Raise your right arm by 45 degrees." Optionally, the mobile phone may further superimpose another color on a right arm part in the guide box on the interface, to inform the user that a pose of the right arm is inconsistent.

An embodiment of this application further provides a guide box display method. A mobile phone may perform multi-step detection on a user and remind the user, to prompt the user to adjust a pose based on a pose in a guide box in the mobile phone.

Optionally, the mobile phone may prompt the user step by step in terms of image quality of a display picture, identification of a single person or a plurality of persons in the display picture, completeness of a user portrait, a size of the user portrait, a position of the user portrait, a degree to which a pose of the user portrait fits with a pose in a guide box, and the like.

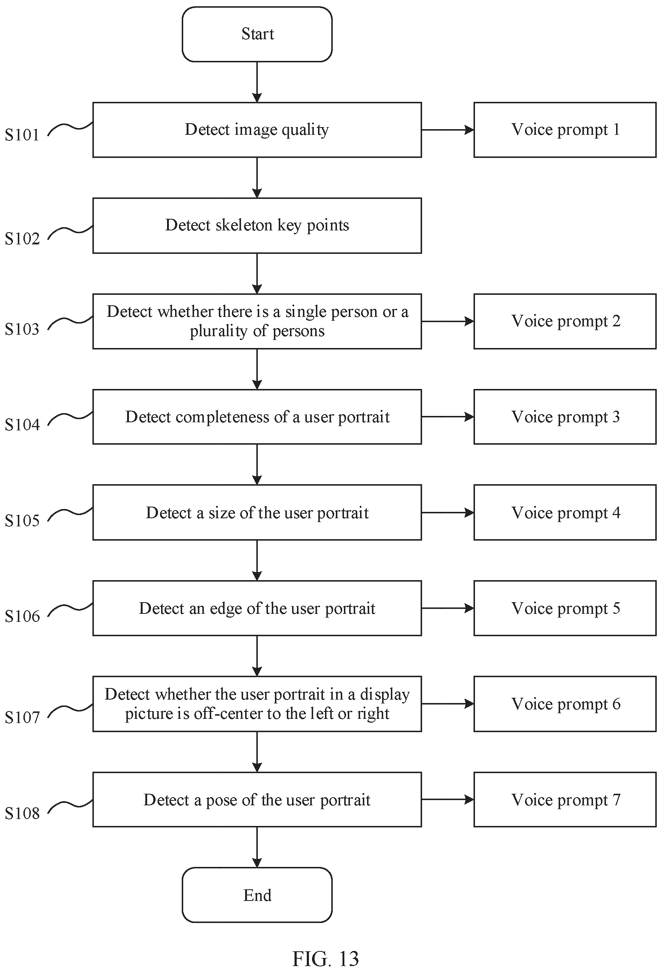

As shown in FIG. 13, in this embodiment of this application, a voice prompt is used as an example, and the multi-step detection that the mobile phone may perform on the user may include steps S101 to S108.

S101: The mobile phone detects the image quality of the display picture.

Optionally, if a position of the mobile phone is a backlight position, the display picture of the mobile phone is dark at this time. In this case, the mobile phone may send a voice prompt 1 to inform the user that the display picture of the mobile phone is dark, and it is advised to change a photographing position. For example, the voice prompt 1 may be "Display picture of the mobile phone is dark. It is advised to change the photographing position."

Alternatively, if a position of the mobile phone is a bright position, the display picture of the mobile phone is exposed at this time, and consequently, the display picture is unclear. In this case, the mobile phone may send a voice prompt 1 to inform the user that the display picture of the mobile phone is bright, and it is advised to change a photographing position. For example, the voice prompt 1 may be "Display picture of the mobile phone is bright. It is advised to change the photographing position."

S102: The mobile phone detects skeleton key points of a person in the display picture.

Optionally, the mobile phone may detect skeleton key points of one or more persons in the display picture. For each person, a plurality of skeleton key points may be detected.

S103: The mobile phone detects whether there is a single person or a plurality of persons in the display picture.

Optionally, when there are a plurality of persons in the display picture, a guide box generated by the mobile phone based on a plurality of portraits may not be in a human shape. Therefore, the mobile phone needs to prompt the user to ensure that there is only one person, namely, the user, in the display picture of the mobile phone. When detecting a plurality of persons in the display picture of the mobile phone, the mobile phone sends a voice prompt 2 to prompt the user. For example, the voice prompt 2 may be "Ensure that there is only one person on the display interface of the mobile phone." Alternatively, the mobile phone may give a prompt on the interface.

S104: The mobile phone detects completeness of the user portrait in the display picture.

Optionally, as shown in (a) in FIG. 4, if the user is excessively close to the mobile phone or at a position excessively deviated from the mobile phone, a part of the user portrait may be displayed on the display interface of the mobile phone. In this case, the mobile phone may prompt the user to adjust a relative position relationship between the user and the mobile phone, to ensure that a full body of the user is on the display interface of the mobile phone. For example, a voice prompt 3 may be "Move your position to ensure that the full-body portrait is on the display interface of the mobile phone."

S105: The mobile phone detects the size of the portrait in the display picture.

Optionally, in (b) in FIG. 5, if the user is close to the mobile phone, the portrait is large; and in (a) in FIG. 5, if the user is far away from the mobile phone, the portrait is small. Both cases are not conducive to obtaining, through photographing, an appropriate photo of the user in a specific pose. In this case, the mobile phone may prompt the user to adjust the relative position relationship between the user and the mobile phone, so that the size of the portrait in the display picture of the mobile phone is appropriate. For example, when a proportion of the portrait to a screen is less than 0.3, it indicates that the user is far away from the mobile phone, and the mobile phone may prompt the user to approach the mobile phone. In this case, a voice prompt 4 may be "Take two steps forward." When a proportion of the portrait to a screen is greater than 0.5, it indicates that the user is close to the mobile phone, and the mobile phone may prompt the user to move away from the mobile phone. In this case, a voice prompt 4 may be "Take two steps back." Alternatively, the mobile phone may give a prompt on the interface.

S106: The mobile phone detects an edge of the portrait in the display picture.

Optionally, if the portrait is close to an edge of the screen of the mobile phone, it indicates that the mobile phone is placed at an excessively high or excessively low position, or the mobile phone is placed at an excessively large angle of depression or elevation. For details, refer to descriptions in FIG. 7B and Table 1. For example, if an upper edge of the portrait is in touch with or close to an upper edge of the screen of the mobile phone, the angle of depression of the mobile phone is less than 7 degrees. In this case, a voice prompt 5 of the mobile phone may be "Raise the height of the mobile phone."

S107: The mobile phone detects whether the portrait in the display picture is off-center to the left or right.

Optionally, a voice prompt 6 sent by the mobile phone when detecting that the portrait is off-center to the left may be "Take one step to the right"; or a voice prompt 6 sent by the mobile phone when detecting that the portrait is off-center to the right may be "Take one step to the left."

S108: The mobile phone detects the pose of the portrait in the display picture.

Optionally, when the pose of the portrait is different from a specific pose in the guide box, the mobile phone may prompt the user by using a voice to strike a correct pose. For details, refer to descriptions in FIG. 12. For example, a voice prompt 7 sent by the mobile phone when the right arm of the user is not raised by the specified 45 degrees may be "Raise your right arm by 45 degrees."

In a possible implementation, the mobile phone sequentially performs cyclic detection on the user according to steps S101 to S108. When detecting that the image quality or the portrait does not meet a requirement, the mobile phone prompts, in a voice manner or another manner, the user to adjust the position or the pose, or adjust the position of the mobile phone. Alternatively, when detecting that steps S101 to S103 meet requirements, the mobile phone does not perform subsequent detection according to steps S101 to S103, but performs cyclic detection according to steps S104 to S108. When detecting that the portrait does not meet the requirement, the mobile phone prompts the user by using a voice to adjust the position or the pose, or adjust the position of the mobile phone. This is not specifically limited in embodiment of this application.

An embodiment of this application further provides a guide box display method. A mobile phone may send a portrait and a corresponding guide box to a television. As shown in FIG. 14A, the mobile phone and the television synchronously display the portrait and the corresponding guide box. After a user strikes a specific pose in the guide box based on a picture prompt in the television, the mobile phone performs photographing, and performs body shape analysis on the user based on a photo. In this solution, because a display screen of the television is larger than a display screen of the mobile phone, the user may watch a clearer guide box and portrait by using the television, and the guide box guides the user to adjust a photographing pose accordingly. This helps the user quickly adjust to an accurate photographing pose, so that visual experience of the user is improved.

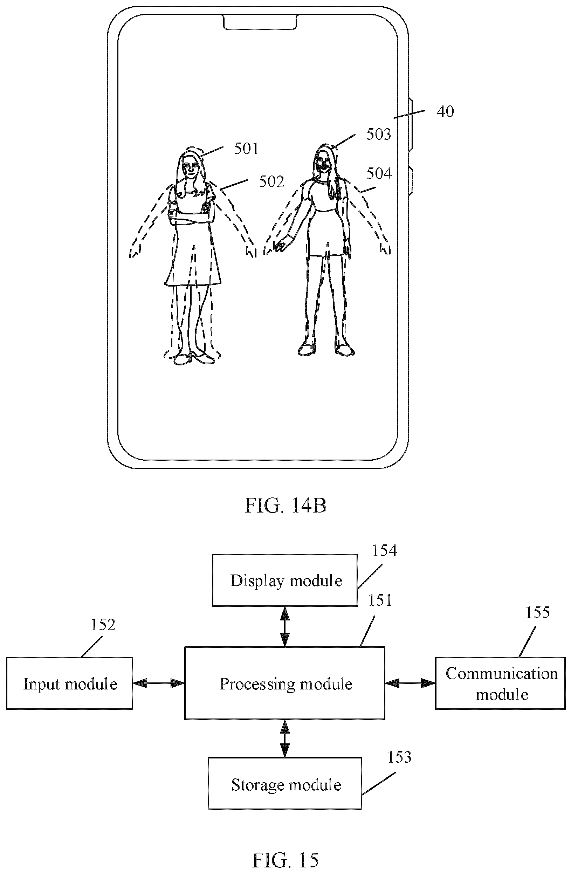

An embodiment of this application further provides a guide box display method. In some embodiments, a mobile phone may obtain a plurality of user portraits and/or body parameters, and separately determine a plurality of guide boxes corresponding to each user portrait. As shown in FIG. 14B, a display interface 40 on a screen of the mobile phone may display a portrait 501 of a user 1 and a corresponding guide box 502, and a guide box 503 of a user 2 and a corresponding guide box 504. The user 1 adjusts a pose of the user 1 based on a pose in the guide box 502, so that the portrait 501 captured by the mobile phone fits with a contour of the guide box 502. The user 2 adjusts a pose of the user 2 based on a pose in the guide box 504, so that the portrait 503 captured by the mobile phone fits with a contour of the guide box 504.

Optionally, when the pose of the user 1 is consistent with the pose in the guide box 502, and the pose of the user 2 is consistent with the pose in the guide box 504, the mobile phone performs photographing. A photo of the user 1 and the user 2 in specific poses is obtained, and the mobile phone performs subsequent body fat analysis based on a portrait of the user 1 and a portrait of the user 2 in the photo.

Alternatively, when the pose of the user 1 is consistent with the pose in the guide box 502, the mobile phone performs photographing, to obtain a photo 1 of the user 1 in a specific pose. When the pose of the user 2 is consistent with the pose in the guide box 504, the mobile phone performs photographing, to obtain a photo 2 of the user 2 in a specific pose. The mobile phone separately captures a portrait of the user 1 in the photo 1 and a portrait of the user 2 in the photo 2, to perform subsequent body fat analysis.

An embodiment of this application further provides a guide box display method. In some embodiments, a mobile phone may separately generate a male guide box and a female guide box based on a gender of a user.

The male guide box may include a plurality of different types of guide boxes based on different user hairstyles. For example, the male guide box may be classified as a bald hairstyle guide box, a crew-cut hairstyle guide box, a short hairstyle guide box, or the like. The female guide box may include a plurality of different types of guide boxes based on different user hairstyles. For example, the female guide box may be classified as a short hairstyle guide box, a medium-long hairstyle guide box, a long hairstyle guide box, or the like.

Optionally, the mobile phone may store a plurality of types of guide boxes in a sample library. When detecting the gender and a hairstyle length of the user, the mobile phone obtains a corresponding guide box in the sample library, and then performs stretching, scaling, or perspective transformation on the guide box.

Optionally, types of the guide box may alternatively be classified in another manner, for example, based on a height, a weight, a body mass index (body mass index, BMI), a body fat rate, a body shape (for example, a pear-shaped body or an apple-shaped body), or the like. This is not specifically limited in this embodiment of this application. Then, the mobile phone may directly invoke a template of a corresponding type to perform perspective transformation, stretching transformation, or scaling transformation.

In some embodiments, some operations in the procedures of the foregoing method embodiments are optionally combined, and/or a sequence of some operations is optionally changed. In addition, an execution sequence between steps of each procedure is merely an example, and does not constitute a limitation on an execution sequence between the steps. The steps may alternatively be performed in another execution sequence. It is not intended to indicate that the execution sequence is the only sequence in which these operations may be performed. A person of ordinary skill in the art may learn various manners of re-ordering the operations described in this specification. In addition, it should be noted that process details related to an embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the foregoing method embodiments may be implemented separately or in combination.

Some other embodiments of this application provide an apparatus. The apparatus may be the foregoing second electronic device, the foregoing first electronic device, a component in the first electronic device, or a component (for example, a chip system) in the second electronic device.

The apparatus may include a display, a memory, and one or more processors. The display and the memory are coupled to the processor. The memory is configured to store computer program code. The computer program code includes computer instructions. When the processor executes the computer instructions, the electronic device may perform the functions or steps performed by the mobile phone in the foregoing method embodiments. For a structure of the electronic device, refer to the structure of the electronic device shown in FIG. 1C.

A core structure of the electronic device may be represented as the structure shown in FIG. 15. The electronic device includes a processing module 151, an input module 152, a storage module 153, a display module 154, and a communication module 155.

The processing module 151 may include at least one of a central processing unit (CPU), an application processor (Application Processor, AP), or a communication processor (Communication Processor, CP). The processing module 151 may perform an operation or data processing related to control and/or communication of at least one of other elements of a user electronic device. Optionally, the processing module 151 is configured to support the first electronic device 100 in performing S101 to S108 in FIG. 13.

The input module 152 is configured to: obtain instructions or data input by a user, and transmit the obtained instructions or data to another module of the electronic device. Specifically, an input mode of the input module 152 may include touch, a gesture, proximity to a screen, or the like, or may be a voice input. For example, the input module may be a screen of the electronic device, and may obtain an input operation of the user, generate an input signal based on the obtained input operation, and transmit the input signal to the processing module 151. Optionally, the input module 152 is configured to obtain a user body parameter. Refer to the diagram of the interface shown in FIG. 11.

The storage module 153 may include a volatile memory and/or a non-volatile memory. The storage module is configured to store instructions or data related to at least one of other modules of a user terminal device. Optionally, the storage module 153 is configured by the first electronic device 100 to store the user body parameter.

The display module 154 may include, for example, a liquid crystal display (LCD), a light-emitting diode (LED) display, an organic light-emitting diode (OLED) display, a micro-electro-mechanical system (MEMS) display, or an electronic paper display, and is configured to display content (for example, a text, an image, a video, an icon, and a symbol) that can be viewed by the user. Optionally, the display module 154 is configured by the first electronic device 100 to display the content shown in FIG. 2A(a) to FIG. 2A(e).

The communication module 155 is configured to support communication (through a communication network) between a personal terminal and another personal terminal. For example, the communication module may be connected to a network through wireless communication or wired communication, to communicate with another personal terminal or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS. Optionally, the communication module 155 is configured to support the first electronic device in communicating with the second electronic device. For example, refer to the diagram of the system shown as FIG. 1B.

The apparatus shown in FIG. 15 may further include more or fewer components, or some components may be split, or another component layout manner may be used. This is not limited in embodiments of this application.

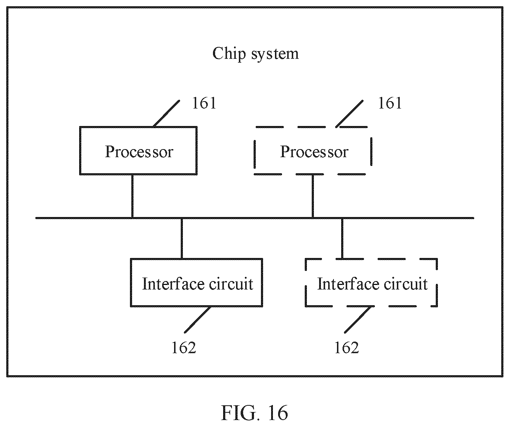

An embodiment of this application further provides a chip system. As shown in FIG. 16, the chip system includes at least one processor 161 and at least one interface circuit 162. The processor 161 and the interface circuit 162 may be interconnected through a line. For example, the interface circuit 162 may be configured to receive a signal from another apparatus (for example, a memory of an electronic device). For another example, the interface circuit 162 may be configured to send a signal to another apparatus (for example, the processor 161). For example, the interface circuit 162 may read instructions stored in a memory, and send the instructions to the processor 161. When the instructions are executed by the processor 161, the electronic device is enabled to perform the steps in the foregoing embodiments. Certainly, the chip system may further include another discrete device. This is not specifically limited in embodiments of this application.

An embodiment of this application further provides a computer-readable storage medium. The computer-readable storage medium includes computer instructions. When the computer instructions are run on the foregoing electronic device, the electronic device is enabled to perform the functions or steps performed by the mobile phone in the foregoing method embodiments.

An embodiment of this application further provides a computer program product. When the computer program product runs on a computer, the computer is enabled to perform the functions or steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. During actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and module, refer to a corresponding process in the foregoing method embodiments. Details are not described herein again.

In the several embodiments provided in this application, it should be understood that the disclosed apparatus and method may be implemented in other manners. For example, the described apparatus embodiment is merely an example. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, that is, may be located in one place, or may be distributed in a plurality of different places. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of steps of methods in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A guide box display method, wherein the method is applied to a first electronic device, and the method comprises:
displaying a first interface, wherein the first interface comprises a first guide box and a first portrait in a captured first image, the first guide box is used to guide a user to strike a first pose, and the first guide box is determined based on a user body parameter corresponding to the first portrait;
capturing a second image of the user, wherein the second image comprises a second portrait of the user; and
displaying the second portrait and a second guide box on the first interface, wherein the second guide box is a guide box obtained by adjusting the first guide box, and the second guide box is determined based on a user body parameter corresponding to the second portrait.

2. The method according to claim 1, wherein the body parameter comprises any one or more of the following parameters: a height, a weight, a gender, an age, a circumference of each part of the user and a length of a limb, skeleton key points, and a hairstyle.

3. The method according to claim 1 or 2, comprising:
the second guide box is obtained by performing perspective transformation, stretching transformation, or scaling transformation on the first guide box based on the second portrait and the first guide box.

4. The method according to any one of claims 1 to 3, wherein after the displaying a first interface comprising a first portrait, the method further comprises:
if a user pose corresponding to the first portrait is consistent with a user pose corresponding to the first guide box, collecting a body parameter of the user in the pose corresponding to the first guide box.

5. The method according to any one of claims 1 to 4, wherein after the displaying a first interface comprising a first portrait, the method further comprises:
capturing a third image of the user, wherein the third image comprises a third portrait of the user, the third image is an image captured after the first image is captured, and a user pose corresponding to the third portrait is different from the user pose corresponding to the first portrait;
displaying the third portrait on the first interface; and
if the user pose corresponding to the third portrait is consistent with the user pose corresponding to the first guide box, collecting the body parameter of the user in the pose corresponding to the first guide box.

6. The method according to any one of claims 1 to 5, wherein before the first image of the user is captured, the method further comprises:
displaying a third guide box on the first interface; and
after the first image of the user is captured, that the first interface comprises the first guide box and the first portrait comprises:
displaying the first portrait on the first interface; and if the first portrait meets a first condition, adjusting the third guide box on the first interface to the first guide box, wherein the first condition comprises that the first portrait is a full-body portrait, and a size of the first portrait is within a preset size range.

7. The method according to any one of claims 1 to 6, wherein after the displaying a first interface comprising a first portrait, the method further comprises:
sending information about the first guide box and information about the first portrait to a second electronic device, so that the second electronic device displays the first guide box and the first portrait.

8. The method according to any one of claims 1 to 7, wherein the method further comprises:
capturing a fourth image of the user, wherein the fourth image comprises a fourth portrait of the user; and
if the fourth portrait does not meet a second condition, presenting first prompt information, to prompt the user to perform adjustment so that the portrait meets the second condition; or
if the fourth portrait meets a second condition, displaying a fourth guide box on the first interface based on the fourth portrait, wherein the fourth guide box is determined based on a user body parameter corresponding to the fourth portrait; and
the second condition comprises any one or more of the following conditions: a size of the portrait is within the preset size range, the portrait is a full-body portrait, the portrait is at a middle position of the first interface, the portrait is a portrait of one user, and imaging quality of the portrait meets preset imaging quality.

9. The method according to claim 6, wherein before the displaying a third guide box on the first interface, the method further comprises:
obtaining a historical body parameter of the user;
capturing a fifth image of the user, wherein the fifth image comprises a fifth portrait of the user; and
determining the third guide box based on the historical body parameter and the fifth portrait of the user.

10. The method according to claim 9, wherein before the displaying the second portrait and a second guide box on the first interface, the method further comprises:
obtaining information about a target part in the second portrait, wherein the target part in the second portrait is not aligned with a corresponding part in the first guide box, and the target part comprises a plurality of limb parts obtained by performing portrait segmentation on the second portrait; and
adjusting the first guide box based on the information about the target part in the second portrait, to obtain the second guide box.

11. The method according to any one of claims 1 to 10, wherein the first guide box comprises a three-dimensional guide box or a planar guide box, and the three-dimensional guide box is determined by projecting three-dimensional reconstruction information of the first portrait, depth information, and parameter information of a camera device onto a two-dimensional screen.

12. The method according to any one of claims 1 to 11, wherein a user interface UI effect of the first guide box is different from a UI effect of the first portrait.

13. An electronic device, comprising a display, one or more cameras, one or more processors, and one or more memories, wherein the memory stores one or more computer programs, the one or more computer programs comprise instructions, and when the instructions are executed by the electronic device, the electronic device is enabled to perform the method according to any one of claims 1 to 12.

14. A computer-readable storage medium, wherein the computer-readable storage medium stores instructions, and when the instructions are run on an electronic device, the electronic device is enabled to perform the method according to any one of claims 1 to 12.

15. A computer program product comprising instructions, wherein when the computer program product runs on an electronic device, the electronic device is enabled to perform the method according to any one of claims 1 to 12.
